# EUROPÄISCHE PATENTANMELDUNG

(11) **EP 4 410 160 A1**
(43) Veröffentlichungstag der Anmeldung: **07.08.2024**
(21) Anmeldenummer: 24155105.0
(22) Anmeldetag: 31.01.2024
(51) Int. Cl.: A47J 37/07, A47B 31/00

(54) **REGALSYSTEM ZUR VERWENDUNG FÜR DAS ZUBEREITEN EINER SPEISE**

(30) Priorität: 02.02.2023 DE 102023200861; 03.02.2023 DE 102023200915
(71) Anmelder: Kaiser, Thomas, 87463 Dietmannsried (DE); Wassermann, Christian, 87640 Biessenhofen (DE)
(72) Erfinder: Kaiser, Thomas, 87463 Dietmannsried (DE); Wassermann, Christian, 87640 Biessenhofen (DE)
(74) Vertreter: Gille Hrabal Partnerschaftsgesellschaft mbB Patentanwälte

(57) **Zusammenfassung**

Die Erfindung betrifft ein Regalsystem (1) zur Verwendung für das Zubereiten einer Speise insbesondere im Außenbereich, wobei das Regalsystem (1) einen Rahmen (2) umfasst, der im Wesentlichen aus horizontalen Streben (3) und vertikalen Streben (4) aufgebaut ist. Der Rahmen (2) umfasst eine Grillaufnahmeeinrichtung (5) zur Aufnahme eines Grills (15) und/oder eine Behälteraufnahmeeinrichtung (6) zur Aufnahme mindestens eines Behälters (16) für die Speise oder Speisenbestandteile. Eine effektivere Speisenzubereitung im Außenbereich wie dem Garten oder auf der Terrasse kann so ermöglicht werden.

## Beschreibung

Die Erfindung betrifft ein Regalsystem zur Verwendung für das Zubereiten einer Speise insbesondere im Außenbereich, wobei das Regalsystem einen Rahmen umfasst, der im Wesentlichen aus horizontalen Streben und vertikalen Streben aufgebaut ist.

Die Zubereitung von Speisen im Außenbereich wie dem Garten oder auf der Terrasse gewinnt zunehmend an Beliebtheit. Gleichzeitig steigt die Komplexität der Speisen, die beispielsweise bei einer Feier im Garten zuzubereiten sind. Es fehlt meist an Platz, der in einer Weise bereitgestellt wird, die eine zeiteffiziente Speisenzubereitung unterstützt. Systeme zum Bereitstellen von Platz und Ablagefläche sind Regale wie z.B. der Druckschrift DE202021100626U1.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, vor dem oben erläuterten Hintergrund eine Lösung bereitzustellen.

Zur Lösung der Aufgabe dient ein Regalsystem gemäß Anspruch 1. Vorteilhafte Ausführungsformen ergeben sich aus den Unteransprüchen.

Ein Aspekt zur Lösung der Aufgabe betrifft ein Regalsystem zur Verwendung für das Zubereiten einer Speise insbesondere im Außenbereich, wobei das Regalsystem einen Rahmen umfasst, der im Wesentlichen aus horizontalen Streben und vertikalen Streben aufgebaut ist. Insbesondere umfasst der Rahmen eine Grillaufnahmeeinrichtung zur Aufnahme eines Grills und/oder eine Behälteraufnahmeeinrichtung zur Aufnahme mindestens eines Behälters für die Speise oder Speisenbestandteile. Eine effektivere Speisenzubereitung im Außenbereich wie dem Garten oder auf der Terrasse kann so ermöglicht werden.

Speisenbestandteile können auf diese Weise kompakt an Ort und Stelle mithilfe des Regalsystems für den Benutzer leicht zugänglich gemacht, verarbeitet und gekocht werden. Gleichzeitig kann das Regalsystem in einer kompakten Bauform bereitgestellt werden und so benötigter Lagerraum für das Regalsystem reduziert werden.

Bevorzugt ist der Rahmen, insbesondere die vertikalen und horizontalen Streben aus Metall gefertigt. Vorzugsweise ist das Metall wetterfest oder mit einer wetterfesten Beschichtung versehen. In einer Ausgestaltung sind die vertikalen und/oder horizontalen Streben längliche Profilbauteile, insbesondere mit einer rechteckigen oder quadratischen Querschnittskontur. In einer Ausgestaltung haben die vertikalen und/oder horizontalen Streben im Querschnitt eine Ausdehnung von mindestens 10 mm und/oder höchstens 30 mm. In der Ausgestaltung, in der die vertikale und/oder horizontale Strebe ein längliches Profilbauteil sind, handelt es sich dabei um ein Hohlprofil und/oder eine Wandungsdicke des Profils beträgt im Querschnitt betrachtet mindestens 1 mm und/oder höchstens 3 mm, besonders bevorzugt ungefähr 2 mm. Insbesondere werden die Streben durch Strangguss und/oder längs geschweißte Profilrohre bereitgestellt und/oder sind aus Stahl. Vorzugsweise ist das Profil im Querschnitt geschlossen. Bei einer vergleichsweise großen Wandungsdicke ist auch ein offenes Profil, z.B. ein U- oder L-Profil möglich. Insbesondere handelt es sich bei dem Rahmen um einen Vierkantrahmen.

In einer Ausgestaltung weist das Regalsystem keine Türen oder Schubladen auf, die einen direkten Zugang durch den Benutzer bei der Speisenzubereitung im geschlossenen Zustand blockieren. Eine Speise kann so besonders zeiteffizient zubereitet werden.

In einer Ausgestaltung ist die Grillaufnahmeeinrichtung so beschaffen, dass durch die Grillaufnahmeeinrichtung das Gewicht eines in die Grillaufnahmeeinrichtung eingesetzten Grills auf den Rahmen übertragen wird. Das Gewicht des Grills wird dann nicht durch andere Bauteile als dem Rahmen auf den Boden übertragen. Dies ermöglicht eine besonders kompakte Anordnung des Grills im Regalsystem.

In einer Ausgestaltung ist die Grillaufnahmeeinrichtung so beschaffen, dass wenn kein Grill in der Grillaufnahmeeinrichtung aufgenommen ist, die Grillaufnahmeeinrichtung den verfügbaren Platz im Regalsystem nicht reduziert, bevorzugt ohne ein Entfernen eines Bestandteils der Grillaufnahmeeinrichtung vom Regalsystem. Insbesondere kann ein Brett auf den Bereich im Regalsystem platziert werden, das im Falle eines eingesetzten Grills von dem Grill ausgefüllt würde. In einer bevorzugten Ausgestaltung ist die Grillaufnahmeeinrichtung so beschaffen, dass alle Bestandteile der Grillaufnahmeeinrichtung in vertikaler Richtung eine geringere Ausdehnung haben als die horizontale Strebe des Rahmens, insbesondere derart, dass in einer Frontansicht des Regalsystems die gesamte Grillaufnahmeeinrichtung von einer der horizontalen Streben des Rahmens bevorzugt vollständig verdeckt werden. Die Frontansicht betrachtet das in vorgesehener Weise auf einem Untergrund abgestellte Regalsystem parallel zu einer horizontalen Strebe, also parallel zum Untergrund.

In einer Ausführungsform besteht die Grillaufnahmeeinrichtung im Wesentlichen aus mindestens einem Haltestift und/oder höchstens drei Haltestiften. Die Grillaufnahmeeinrichtung umfasst also mindestens einem Haltestift und/oder höchstens drei Haltestiften. Ein Regalsystem mit einer Grillaufnahmeeinrichtung kann auf diese Weise besonders kompakt bereitgestellt und der Raum des Regals effektiv genutzt werden, wenn kein Grill für die Speisenzubereitung benötigt und daher entfernt wurde.

Ein Haltestift ist ein längliches, insbesondere stabförmiges und/oder gerades Bauteil. Vorzugsweise hat der Haltestift eine runden oder kreisrunde Querschnittsform und/oder ist aus Vollmaterial gefertigt.

In einer Ausgestaltung wird nur ein Haltestift mit einer horizontalen Strebe verbunden und/oder zwei Haltestifte jeweils mit einer horizontalen Strebe verbunden, insbesondere derart, dass der Haltestift von der horizontalen Strebe in Richtung des Inneren des Rahmens absteht, um einen von oben eingesetzten Grill zu stützen. Vorzugsweise ist in dieser Ausgestaltung vorgesehen, dass der nur eine Haltestift oder die zwei Haltestifte so positioniert, so orientiert und/oder so lang sind, dass der Grill nicht nur auf dem nur einen Haltestift oder den zwei Haltestiften aufliegt, sondern zusätzlich gleichzeitig auf mindestens einer horizontalen Strebe, bevorzugt auf zwei horizontalen Strebe aufliegt. Alternativ oder ergänzend ist der Grill im eingesetzten Zustand in der Grillaufnahmeeinrichtung höchstens mit drei Streben in Berührkontakt. Bei allen diesen Varianten kann ein stabiler Sitz eines eingesetzten Grills mit nur einem Haltestift oder zwei Haltestiften der Grillaufnahmeeinrichtung ermöglicht werden. Insbesondere umfasst die Grillaufnahmeeinrichtung mindestens ein Stützauflageelement, die im eingesetzten Zustand eines Grills zwischen dem Grill und einer Strebe angeordnet ist, die ohne die Stützauflageelement in einem direkten Berührkontakt zum heißen Grill stehen würde. Insbesondere ist das Stützauflageelement ein flaches Stück hitzeisolierendes Material, z.B. Kunststoff und/oder Aluminium vorzugsweise mit einer Glasfasereinlage. Vorzugsweise hat das Stützauflageelement eine Dicke von mindestens 2 mm und/oder höchstens 20 mm. Insbesondere ist das Stützauflageelement an die Außenkontur der zu schützenden Strebe angepasst und/oder formschlüssig oder kraftschlüssig verbunden.

In einer Ausgestaltung ist ein Haltestift und/oder ein Stützauflageelement manuell lösbar mit dem Rahmen verbunden. Ein Benutzer erhält auf diese Weise eine einfache Anpassungsmöglichkeit und Flexibilität für den Einsatz des Regalsystems, das insbesondere modular aufgebaut ist, worauf später noch genauer eingegangen wird. Insbesondere kann ein Stützauflageelement auch in Bereichen von Streben angebracht werden, die zwar keinen unmittelbaren Kontakt zum Grill haben, aber dennoch direkt von abgestrahlter Hitze des Grills getroffen werden. Einem verfrühten Verschleiß der Oberfläche der Strebe kann so vorgebeugt werden.

In einer Ausführungsform ist der Haltestift zum Stützen eines in die Grillaufnahmeeinrichtung eingesetzten Grills mit einer horizontalen Strebe des Rahmens verbunden, insbesondere durch eine Schraubverbindung. Durch das Verbinden mit einer horizontalen Strebe kann eine Grillaufnahmeeinrichtung besonders kompakt und platzsparend in einen Rahmen angeordnet werden. Eine Schraubverbindung hat den Vorteil, dass ein Benutzer einen Haltestift mit dem Rahmen verbinden oder lösen kann. Dies erhöht die Flexibilität und Modularität des Regalsystems für verschieden große Grills. Insbesondere hat der Haltestift ein Außengewinde und/oder der Rahmen hat ein entsprechendes Innengewinde für die Schraubverbindung.

In einer besonders bevorzugten Ausgestaltung weist eine horizontale Strebe, die für ein Verbinden mit einem Haltestifte vorgesehen ist, eine Vertiefung mit einem Innengewinde auf, in das ein Haltestift mit einem Außengewinde an dessen zu verbindenden Ende eingeschraubt werden kann. Vorzugsweise wird das Innengewinde durch eine Nietmutter bereitgestellt, die in die horizontale Strebe integriert wurde.

Insbesondere enthält der Rahmen eine Anzahl von Verbindungsmöglichkeiten, insbesondere Gewinde zum Verbinden mit einem Haltestift, die größer ist als die Anzahl der Haltestifte des Regalsystems. Eine höhere Flexibilität und eine Modularität des Regalsystems werden so erzielt. Der Benutzer kann einen Haltestift je nach Größe oder Form des Grills in einer dafür bestmöglichen Position mit dem Rahmen verbinden.

In einer Ausgestaltung hat der Haltestift eine Krümmung und/oder ein freies Ende. Ein freies Ende liegt einem mit der Strebe verbundenen oder verbindbaren Ende gegenüber. Eine gezielte Positionierung und Ausrichtung eines freien Endes des Haltestiftes zum Abstützen des Grills und/oder eines Bereiches des Haltestiftes zwischen dem freien Ende und dem verbundenen Ende kann so erzielt werden. Beispielsweise kann so die Kontaktfläche zum Grill erhöht werden, insbesondere bei einem Grill mit einer gekrümmten Außenkontur. In einer Ausgestaltung ist hat der Haltestift mehrere Krümmungen und/oder mehrere Verbindungsstellen zum Rahmen. Die Hitze des Grills kann im Betrieb so verbessert abgeleitet werden.

In einer Ausgestaltung ist ein Haltestift in einem mittleren Bereich gebogen und/oder ist an beiden Enden jeweils mit gegenüberliegenden horizontalen Streben verbunden. Eine größere Berührkontaktfläche bzw. eine Kontaktlinie zu einem Grill kann so erhalten werden, wenn der Grill in der Grillaufnahmeeinrichtung mit einem solchen Kontaktstift aufgenommen ist und aufliegt. Darüber hinaus erlaubt ein Haltestift ohne ein freies Ende, der in einem mittleren Bereich gebogen und an beiden Enden jeweils mit gegenüberliegenden horizontalen Streben zu verbinden ist, dass der Haltestift durch den gebogenen Bereich relativ leicht vom Benutzer elastisch verformt werden kann, um mit beiden Enden in entsprechende Vertiefungen in den gegenüberliegenden horizontalen Streben eingefügt und auch wieder draus entfernt werden können.

Der Haltestab ist insbesondere über dessen gesamt Länge gerade und/oder genau drei Haltestäbe sind bevorzugt vorgesehen, um die Grillaufnahmeeinrichtung zu bilden. Bevorzugt besteht die Grillaufnahmeeinrichtung ausschließlich aus drei Haltestäben. Ein eingesetzter Grill wird dann bevorzugt durch genau drei Auflagepunkte gehalten. Dies erlaubt nicht nur einen vergleichsweise stabilen Halten, sondern auch ein flexibles Ausrichten des Grills. Der Grill kann insbesondere in einer ersten Stellung und einer zur ersten Stellung geneigten oder verschwenkten Stellung in der Grillaufnahmeeinrichtung aufgenommen und gehalten werden. Ein Ausrichten des Grills zum Benutzer für eine verbesserte Zugänglichkeit zur Speise auf dem Grill wird so ermöglichst, insbesondere bei Nutzung eines halbkugelförmigen Grills, der in einer Grillaufnahmeeinrichtung aus drei Haltestiften vom Benutzer rotiert werden kann. In einer Ausgestaltung hat das freie Ende des mindestens einen Haltestiftes eine abgerundete Form, bevorzugt eine halbkugelartige Form. Auf diese Weise kann unabhängig von der Drehausrichtung des Haltestiftes um seine Längsachse eine Punktauflage mit einem Grill erhalten werden, der in der Grillaufnahmeeinrichtung aufgenommen ist. Insbesondere besteht ein Haltestift aus Metall, vorzugsweise Stahl.

In einer Ausführungsform hat der Haltestift eine längliche Zylinderform und/oder weist an einem freien Ende des Haltestiftes zum Stützen eines Grills eine Rundung auf, vorzugsweise mit einer Halbkugelform oder kugelartig, insbesondere derart, dass eine in die Grillaufnahmeeinrichtung eingesetzter Grill auf der Rundung des freien Endes des Haltestiftes aufsetzen kann. Ein besonders zuverlässiges Stützen des Grills mit möglichst wenig Verschleiß oder Beschädigung der Oberfläche des Grills, der auf dem Haltestift aufsetzt, kann so ermöglicht werden. Bei Vorsehen von drei Haltestiften mit jeweils der Rundung kann eine Dreipunktauflage für den Grill vorgesehen werden.

In einer Ausgestaltung weist der Haltestift an einem freien Ende des Haltestiftes zum Stützen eines Grills eine Fase und/oder einen ebenen Flächenabschnitt auf, insbesondere derart, dass eine in die Grillaufnahmeeinrichtung eingesetzter Grill auf einer geraden Kante an dem freien Ende des Haltestiftes aufsetzen kann. Einer Beschädigung oder Abnutzung der Oberfläche eines Grills, der von dem freien Ende des Haltestiftes gestützt wird, kann so entgegengewirkt werden. Eine Fase ist eine abgeschrägte Fläche. Bevorzugt hat die Fase oder der ebene Flächenabschnitt einen Neigungswinkel zur Längsachse des Haltestiftes zwischen 20° und 50°. Insbesondere ist die Fase oder der Flächenabschnitt in ein freies Ende eines Haltestiftes mit einer abgerundeten Form, bevorzugt eine halbkugelartige Form, eingebracht. Auf diese Weise kann nicht nur im Betrieb des Grills im eingesetzten Zustand in der Grillaufnahmeeinrichtung, sondern während des Einsetzens in die Grillaufnahmeeinrichtung Beschädigungen an der Oberfläche des Grills durch die Haltestifte entgegengewirkt werden. Insbesondere erstreckt sich die gerade Kante senkrecht zur Längsachse des Haltestiftes und/oder mit einem radialen Abstand zur Längsachse. Insbesondere erstreckt sich die gerade Kante wie eine Tangente in einem Abstand zur Längsachse des Haltestiftes, der mindestens 15%, bevorzugt mindestens 30%, und/oder höchstens 85%, bevorzugt höchstens 70% des Durchmessers des Haltestiftes entspricht.

Der Durchmesser eines Haltestiftes ist der auf einem größten Längenabschnitt konstante Durchmesser. Wenn der Haltestift überwiegend aus einem Stab mit konstantem Durchmesser besteht, ist der Durchmesser des Stabs der Durchmesser des Haltestiftes. In einer Ausgestaltung verjüngt sich der Haltestift über einen Großteil seiner Länge. In diesem Fall ist der Durchmesser des Haltestiftes der durchschnittliche Durchmesser über die gesamte Länge des Haltestiftes betrachtet.

Insbesondere hat der Haltestift einen Durchmesser von mindestens 0,8 cm und/oder höchstens 2 cm. Vorzugsweise hat der Haltestift eine Länge von mindestens 1 cm und/oder höchstens 10 cm. In einer Ausgestaltung umfasst die Grillaufnahmeeinrichtung zwei Haltestifte mit unterschiedlicher Länge. Bevorzugt beträgt dann die Länge des kürzeren Haltestiftes mindestens 1 cm und/oder höchstens 5 cm und/oder die Länge des längeren Haltestiftes beträgt mindestens 3 cm und/oder höchstens 10 cm. Vorzugsweise sind ein kurzer und zwei längere Haltestifte vorgesehen, bevorzugt mit identischer Länge der beiden längeren Haltestifte.

In einer Ausführungsform umfasst das Regalsystem einen kugelartigen oder halbkugelförmigen Grill zum Einsetzen von oben in die Grillaufnahmeeinrichtung zum Aufnehmen des Grills. Ein in dieser Weise geformter Grill hat den Vorteil, dass ein Aufnehmen in der Grillaufnahmeeinrichtung durch Aufsetzen auf Haltestiften oder den freien Enden von Haltestiften in verschiedenen Ausrichtungen des Grills möglich ist, insbesondere ohne einen Schwerpunkt des Grills zu verlagern. Ein besonders sicherer Halt in der Grillaufnahmeeinrichtung und ein gleichzeitig flexibles rotieren in der Grillaufnahmeeinrichtung werden so ermöglicht. Vorzugsweise ist der Grill ein Plancha-Grill, bevorzugt ein Holzfeuergrill. Insbesondere hat der Grill einen mittigen Ausgang an der Unterseite zur Entsorgung von Brennmaterialresten nach dem Betrieb. In einer alternativen Ausgestaltung ist der Grill ein oder Kohlegrill oder Gasgrill.

In einer Ausführungsform ist die Grillaufnahmeeinrichtung so eingerichtet, dass der Grill nach dem Einsetzen von oben in die Grillaufnahmeeinrichtung an genau drei Stellen Berührkontakt mit der Grillaufnahmeeinrichtung zum Stützen des Grills hat. Ein stabiles Stützen, welches insbesondere im Fall eines gewölbten oder kugelartigen Grills ein Rotieren in der Grillaufnahmeeinrichtung ermöglichst, kann so erhalten werden. Bevorzugt werden alle Stellen mit Berührkontakt von freien Enden von Haltestiften der Grillaufnahmeeinrichtung bereitgestellt.

In einer Ausführungsform ist die Grillaufnahmeeinrichtung so eingerichtet, dass sich eine erste Stelle und/oder ein erster Haltestift mit Berührkontakt (quer zur Längsrichtung betrachtet) mittig relativ zum Rahmen befindet. Insbesondere sind zwei weitere Stellen und/oder Haltestifte von insgesamt drei Stellen bzw. Haltestiften mit Berührkontakt so angeordnet, dass sich die zweite Stelle bzw. der zweite Haltestift und die dritte Stelle bzw. der dritte Haltestift quer zur Längsrichtung gegenüber liegen. Insbesondere weisen diese zwei weiteren Stellen bzw. die der zweite und dritte Haltestift (in Längsrichtung betrachtet) eine geringe Distanz zu einer Mittelachse des Grills auf als die erste Stelle bzw. der erste Haltestift. Die Mittelachse des Grills läuft dabei quer zur Längsrichtung. Insbesondere verlaufen alle quer zur Längsrichtung spezifizierten Orientierungen in einer gleichen oder parallelen Horizontalebene. Die Längsrichtung im hier gemeinten Sinne gibt eine Orientierung an (keine Richtung) und ist daher unabhängig von der Richtung entlang einer Achse dieser Orientierung zu verstehen.

Vorzugsweise die die erste Stelle bzw. der erste Haltestift auf einer Seite der Mittelachse des Grills (oder einer durch die Mittelachse und Vertikale aufgespannte Mittelebene durch die Mitte des Grills) und die anderen zwei Stellen bzw. die anderen zwei Haltestifte liegen auf der gegenüberliegenden Seite in Längsrichtung. Insbesondere entspricht die Distanz in Längsrichtung gemessen zwischen der ersten Stelle bzw. dem freien Ende des ersten Haltestiftes zur Mittelachse oder Mittelebene des Grills mindestens dem 1,3-fachen, bevorzugt mindestens dem 2-fachen, der Distanz zwischen der Mittelachse (oder Mittelebene) und einer Stellen bzw. eines freien Enden einer der Haltestifte auf der gegenüberliegenden Seite zur Mittelachse (oder Mittelebene) des Grills. Vorzugsweise haben beide Stellen bzw. beide Haltestifte auf der gegenüberliegenden Seite denselben Abstand zur Mittelachse (oder Mittelebene).

In einer Ausgestaltung erstreckt sich das Regalsystem oder der Rahmen des Regalsystems in Längsrichtung weiter als quer zur Längsrichtung, vorzugsweise mit einer ungefähr doppelten Ausdehnung in Längsrichtung verglichen mit dessen Querausdehnung. Insbesondere beträgt die Länge in Längsrichtung mindestens 80 cm, bevorzugt mindestens 100 cm, und/oder höchstens 120 cm. Insbesondere beträgt die Breite quer zur Längsrichtung mindestens 30 cm, bevorzugt mindestens 50 cm, und/oder höchstens 60 cm. Vorzugsweis beträgt eine Höhe mindestens 70 cm und/oder höchstens 110 cm, besonders bevorzugt höchstens 80 cm. Beispielsweise kann eine Länge 118 cm, eine Breite 58 cm und/oder eine Höhe 79 cm sein.

In einer Ausgestaltung hat das Regalsystem mindestens 2 und/oder höchstens 5 horizontale Ebenen mit horizontalen Streben auf jeder Ebene. Vorzugsweise erstreckt sich ein Teil der horizontalen Streben in Längsrichtung des Rahmens und ein anderer Teil der horizontalen Streben erstreckt sich quer zur Längsrichtung. Vorzugsweise hat mindestens die oberste und unterste horizontale Ebene jeweils mindestens ein oder zwei horizontalen Streben, die sich quer zur Längsrichtung erstrecken. Vorzugsweise hat jede horizontale Ebene sich in Längsrichtung erstreckende horizontale Streben, insbesondere gegenüberliegende horizontale Streben. Insbesondere bildet eine in Längsrichtung verlaufende Strebe mit einer quer dazu verlaufenden, horizontalen Strebe eine Ecke, bevorzugt unter einem rechten Winkel. Bevorzugt bilden zwei sich gegenüberliegende horizontale Streben mit einer quer dazu verlaufenden horizontalen Strebe eine U-Form aus.

In einer Ausgestaltung hat das Regalsystem mindestens 4 und/oder höchstens 6 oder 8 vertikale Streben. Insbesondere bildet eine vertikale Strebe mit einer horizontalen Strebe eine Ecke, bevorzugt unter einem rechten Winkel. Vorzugsweise bilden zwei vertikale Streben mit einer horizontalen Strebe eine U-Form aus. Weil vertikale Streben bedeutend für die Stabilität des Regalsystems sind, jedoch die Zugänglichkeit zu den horizontalen Ebenen hemmt, in denen beispielsweise Speisebestandteile aufbewahrt oder verarbeitet werden, sind genau 4 vertikale Streben zu bevorzugen. Es ist möglich, zwei Regalsysteme nebeneinander zu stellen. Zwei nebeneinander stehende Regalsysteme bilden jedoch kein Regalsystem im vorliegenden Sinne, sondern sind zwei getrennte Regalsysteme.

In einer Ausgestaltung ist ein erster und/oder kürzester Haltestift mit einer quer zur Längsrichtung orientierten horizontalen Strebe verbunden. Insbesondere ist der Haltestift mit dieser Strebe in der Mitte der Strebe verbunden, insbesondere derart, dass der Haltestift mittig zwischen zwei gegenüberliegenden (sich in Längsrichtung erstreckenden) horizontalen Streben positioniert und/oder befestigt ist. Vorzugsweise steht der Haltestift im verbundenen Zustand mit dieser Strebe senkrecht oder ungefähr senkrecht von der Strebe ab, insbesondere entlang der horizontalen Ebene. Vorzugsweise steht der Haltestift gerade von der Strebe ab und/oder bildet somit mit der Strebe eine T-Form aus. Der Haltestift erstreckt sich von der Strebe ins Innere des Rahmens.

In einer Ausgestaltung ist ein zweiter Haltestift vorgesehen. Insbesondere ist der zweite Haltestift mit einer in Längsrichtung orientierten horizontalen Strebe verbunden. Insbesondere ist der Haltestift mit dieser Strebe nicht in einem Bereich der Mitte und auch nicht in einem Bereich an beiden Enden der horizontalen Strebe verbunden. Insbesondere haben diese drei Bereiche, in denen der Haltestift nicht mit der sich in Längsrichtung erstreckenden horizontalen Strebe verbunden ist, jeweils eine Ausdehnung in Längsrichtung zwischen 10% und 20% der Länge der horizontalen Strebe oder zwischen 20% und 50% der Breite des Rahmens. Vorzugsweise steht der Haltestift im verbundenen Zustand mit einer sich in Längsrichtung erstreckenden horizontalen Strebe senkrecht oder ungefähr senkrecht von der Strebe ab, insbesondere entlang der horizontalen Ebene. Vorzugsweise steht der Haltestift gerade von der Strebe ab und/oder bildet somit mit der Strebe eine T-Form aus. Der Haltestift erstreckt sich von der Strebe ins Innere des Rahmens.

In einer Ausgestaltung ist ein dritter Haltestift vorgesehen, der ebenfalls mit einer sich in Längsrichtung orientierten horizontalen Strebe verbunden ist. Vorzugsweise liegt die mit dem zweiten Haltestift verbundene horizontale Strebe der mit dem dritten Haltestift verbundenen horizontalen Strebe gegenüber, d.h., auf derselben horizontalen Ebene.

Insbesondere weisen der zweite Haltestift und der dritte Haltestift denselben Abstand zu einer quer zur Längsrichtung orientierten horizontalen Strebe derselben horizontalen Ebene auf und/oder bilden mit der quer orientierten horizontalen Strebe eine U-Form, insbesondere mit rechten Winkeln. Vorzugsweise sind der zweite Haltestift und der dritte Haltestift gleich lang und/oder baugleich.

In einer Ausgestaltung erstreckt sich ein Haltestift zwischen zwei gegenüberliegenden horizontalen Streben und/oder weist in einem mittleren Bereich eine Biegung auf. Insbesondere ist der Haltestift bezogen auf dessen Mitte in Längsrichtung symmetrisch geformt. Vorzugsweise hat die Biegung einen konstanten Radius. Ein kugelartig geformter Grill kann auf diese Weise mit einer Kontaktlinie entlang der Biegung auf dem Haltestift aufliegen.

In einer Ausgestaltung weist ein erster Haltestift eine Orientierung in Längsrichtung des Regalsystems auf und/oder zwei weiterer Haltestifte haben eine Orientierung quer zur Längsrichtung.

In einer Ausführungsform bilden mindestens zwei sich gegenüberliegende, horizontale Streben des Rahmens, die sich in Längsrichtung des Rahmens erstrecken, die Behälteraufnahmeeinrichtung, so dass ein in die Behälteraufnahmeeinrichtung eingesetzter Behälter auf den mindestens zwei horizontalen Streben aufliegt. Ein besonders kompaktes Regalsystem mit besonders effizienter Raumausnutzung kann so bereitgestellt werden.

Insbesondere ist eine Länge eines Behälter, der in Richtung von dessen Länge an beiden Enden Absätze aufweist, an den lichten Abstand zwischen zwei sich gegenüberliegende, horizontale Streben des Rahmens angepasst, um darin eingesetzt werden zu können, insbesondere derart, dass die beiden Absätze jeweils auf einem der gegenüberliegenden, horizontalen Streben aufliegen. Der Behälter hat eine Wanne, die sich zwischen den gegenüberliegenden Absätzen nach unten ausdehnt, um eine Speise oder Speisenbestandteile aufnehmen zu können. Insbesondere sind der Behälter und/oder die Wanne des Behälters so beschaffen, dass im eingesetzten Zustand in die Behälteraufnahmeeinrichtung die Wanne ein Spiel zu den gegenüberliegenden, horizontalen Streben aufweist, das kleiner als die Länge von einem der Absätze ist, insbesondere kleiner als von dem kürzeren der beiden Absätze. Vorzugsweise haben beide Absätze die gleiche Länge. Der Behälter ist auf diese Weise zuverlässig gegen ein Herausschieben Richtung von dessen Länge abgesichert, wenn der Behälter von der Behälteraufnahmeeinrichtung aufgenommen ist.

In einer Ausführungsform umfasst die Behälteraufnahmeeinrichtung mindestens zwei Zusatzstreben, die sich quer zur Längsrichtung erstrecken. Ein Behälter oder mehrere Behälter können auf diese Weise in Längsrichtung des Rahmens in die Behälteraufnahmeeinrichtung eingesetzt werden. Insbesondere hat die Zusatzstrebe eine andere Querschnittskontur verglichen mit einer horizontalen Strebe des Rahmens. Vorzugsweise hat die Zusatzstrebe eine geringere, maximale Ausdehnung im Querschnitt betrachtet verglichen mit der horizontalen Strebe, bevorzugt eine mindestens 20% und/oder höchstens 60% kleineren Ausdehnung. Besonders bevorzugt hat die Zusatzstrebe eine zylinderartige oder zylindrische Form, vorzugsweise in Form eines Stabs oder Rohrs. Insbesondere weist die Zusatzstrebe an einem Ende ein Verbindungsmittel zum manuell lösbaren Verbinden mit einer horizontalen Strebe auf. Insbesondere ist das Verbindungsmittel der Zusatzstrebe ein Außengewinde. Bevorzugt hat die horizontale Strebe eine Ausnehmung mit einem Innengewinde, in das das Außengewinde der Zusatzstrebe eingeschraubt werden kann. In einer Ausgestaltung hat die Zusatzstrebe einen konstanten Durchmesser, bevorzugt über dessen gesamte Länge. Bevorzugt hat die Zusatzstrebe nur an einem Ende ein Gewinde. Insbesondere hat eine horizontale Strebe eine Ausnehmung ohne ein Gewinde, so dass die Zusatzstrebe insbesondere vom Benutzer mit dem Ende ohne Gewinde in die Ausnehmung ohne Gewinde gesteckt werden kann und die Zusatzstrebe anschließend an der gegenüberliegenden Seite mit dem Außengewinde am anderen Ende in eine Ausnehmung der gegenüberliegenden horizontalen Strebe mit Innengewinde gedreht werden kann, um die Zusatzstrebe mit zwei gegenüberliegenden horizontalen Streben zu verbinden. In einer Ausgestaltung kann die Zusatzstrebe an beiden Enden ein Außengewinde aufweisen und nur eine der gegenüberliegenden Ausnehmungen der horizontalen Streben hat ein Innengewinde. Ein Verwechseln der Seiten durch den Benutzer kann so vermieden werden, weil die Zusatzstrebe unabhängig von davon, ob diese 0° oder 180° gedreht vorliegt, in der oben beschriebenen Weise mit den gegenüberliegenden horizontalen Streben verbunden werden kann. Das Ende mit dem Außengewinde wird dann ohne ein Verschrauben nur in die eine Ausnehmung ohne Gewinde eingesteckt und mit dem gegenüberliegenden Außengewinde am anderen Ende in das Innengewinde der gegenüberliegenden Ausnehmung geschraubt.

In einer Ausgestaltung sind mehr Ausnehmungen vorgesehen als zum Verbinden von zwei Zusatzstreben benötigt werden. Hierdurch kann der Benutzer nach seinen aktuellem Bedarf die Zusatzstangen dort anbringen, wo in Längsrichtung orientierte Behälter benötigt werden. Dies erhöht die Flexibilität und Modularität des Regalsystems.

In einer Ausführungsform erstrecken sich die Zusatzstreben zwischen den zwei sich gegenüberliegenden, horizontalen Streben der Behälteraufnahmeeinrichtung. Ein Behälter oder mehrere Behälter können auf diese Weise in einer anderen Höhe bzw. vertikalen Position in Längsrichtung des Rahmens in die Behälteraufnahmeeinrichtung eingesetzt werden, verglichen mit einem Einsetzen quer zur Längsrichtung auf sich gegenüberliegende horizontale Streben.

Beim Einsetzen eines Behälters in Längsrichtung in die Behälteraufnahmeeinrichtung liegen die Absätze des eingesetzten Behälters auf den Zusatzstreben auf, insbesondere ohne dabei auf einer horizontalen Strebe des Rahmens aufzuliegen. Vorzugsweise verlaufen ein Paar von zwei Zusatzstreben parallel zueinander und/oder liegen sich in Längsrichtung gegenüber. Insbesondere liegen zwei sich gegenüberliegende Zusatzstreben (eines Paares) auf derselben horizontalen Ebene. Ein Einsetzen eines Behälters in die Behälteraufnahmeeinrichtung entspricht insbesondere einem Einhängen.

In einer Ausgestaltung wird eine sich quer zur Längsrichtung erstreckende Strebe des Rahmens weggelassen und stattdessen in diesem Bereich oder an dessen Stelle eine Zusatzstrebe der Behälteraufnahmeeinrichtung vorgesehen. Es werden hierdurch gleich mehrere, synergetische Effekte erzielt. Zum Einen kann auf diese Weise eine Strebe des Rahmens eingespart werden. Zum Anderen kann die Zusatzstrebe auf diese Weise besonders nahe oder maximal zu einem Ende des Rahmens in Längsrichtung angeordnet werden, damit in Längsrichtung orientierte Behälter besonders weit zum Ende des Rahmens positioniert werden können. Ein sehr kompaktes Regalsystem mit Behälteraufnahmeeinrichtung kann auf diese Weise nicht nur mit geringem Herstellungsaufwand und weniger Teilen bereitgestellt werden, sondern gleichzeitig eine nahezu maximale Raumausnutzung zur Ablage von Speisenbestandteilen ermöglicht werden.

In einer Ausführungsform umfasst das Regalsystem den mindestens einen Behälter für die Speise oder Speisenbestandteile und/oder mindestens ein Brett zum Bearbeiten einer Speise oder von Speisebestandteilen darauf. Ein effizientes Zubereiten von Speisen auf engem Raum mit einem kompakten Regalsystem wird so ermöglicht.

In einer Ausführungsform sind die Zusatzstreben mit einem vertikalen Versatz mit zwei gegenüberliegenden, horizontalen Streben verbunden, insbesondere derart, dass die Zusatzstrebe vertikal niedriger als die horizontalen Streben angeordnet ist und/oder an beiden Enden jeweils eine Stufenform mit der verbundenen horizontalen Strebe bildet. Ein Behälter, der mit beiden Enden bzw. dessen Absätzen auf den gegenüberliegenden Zusatzstreben aufliegt, liegt unterhalb der Oberseite der horizontalen Streben der horizontalen Ebene auf, in der der Behälter in der Behälteraufnahmeeinrichtung aufgenommen ist. Dies ermöglicht eine doppelte Verwendung derselben Stellfläche, bevorzugt durch das Brett zum Bearbeiten einer Speise oder von Speisebestandteilen, das über den eingesetzten Behälter gleichzeitig auf den gegenüberliegenden horizontalen Streben aufgelegt und/oder eingesetzt werden kann. Insbesondere ist der Versatz in vertikaler Richtung (nach unten) größer als die vertikale Ausdehnung des Absatzes und/oder die vertikale Ausdehnung des Behälters oberhalb der Unterseite des Absatzes des Behälters. Der Absatz des Behälters liegt im eingesetzten Zustand auf der Zusatzstrebe auf.

Die Stufenform bewirkt ferner ein besonders zuverlässiges Aufnehmen und Führen des Behälters beim Einsetzen und Entnehmen. Vorzugsweise ist der Versatz (also der vertikale Versatz) und/oder der vertikale Höhenunterschied der Stufenform (bzw. die Höhe der Stufe) größer als die vertikale Ausdehnung der Absätze des Behälters im eingesetzten Zustand, so dass eine Oberseite eines in Längsrichtung eingesetzten Behälters um einen Betrag einer Höhendifferenz tiefer liegt als die Oberseite der horizontalen Strebe der horizontalen Ebene. Die vertikale Ausdehnung der Absätze des Behälters entspricht insbesondere dem Abstand von der Auflagefläche an der Unterseite des Absatzes bis zum höchsten Punkt des Behälters in vertikaler Richtung betrachtet. Insbesondere beträgt die Höhendifferenz mindestens dem Betrag (oder genau dem Betrag zuzüglich einer Spielpassung) einer vertikalen Ausdehnung des Vorsprungs des Brettes oder des Einsatzgestells, die von der jeweiligen Auflagefläche im eingesetzten Zustand nach unten zum untersten Punkt des Vorsprungs gemessen wird. In einer Ausgestaltung beträgt die Höhendifferenz mindestens dem im vorangegangenen Satz spezifizierten Betrag (oder genau dem Betrag zuzüglich einer Spielpassung) ferner zuzüglich einer Elementdicke. Insbesondere beträgt die Elementdicke mindestens 0,5 mm und/oder höchstens 1,5 mm. Insbesondere beschreibt die Elementdicke die Dicke eines Profils einer Einsatzstrebe, auf die weiter unten genauer eingegangen wird. Ein Brett oder ein Einsatzgestell können auf diese Weise auf die horizontalen Streben aufgelegt und somit aufgenommen werden, ohne eine nennenswerte Last auf darunter eingesetzte Behälter oder Einsatzstreben auszuüben oder diese zu berühren. Ein Führen des Brettes oder des Einsatzgestells mithilfe des jeweiligen Vorsprungs entlang der gegenüberliegenden horizontalen Streben ist dennoch gleichzeitig gewährleistet.

In einer Ausführungsform ist an einer Unterseite des Brettes und/oder des Behälters ein mittiger, sich vertikal nach unten erstreckender Vorsprung vorhanden. Bei dem Behälter entspricht der Vorsprung der Außenseite der Wanne. Bei dem Brett dient die Oberseite der Bearbeitung einer Speise oder eines Speisenbestandteils und/oder dessen Unterseite dient dem Einsetzen in die Behälteraufnahmeeinrichtung. Insbesondere weist der Vorsprung des Brettes (oder Behälters) und/oder die Wanne des Behälters eine horizontale Ausdehnung auf, die relativ zum Abstand zwischen den zwei sich gegenüberliegenden, horizontalen Streben eine Spielpassung hat. Auf diese Weise wird das Brett und/oder der Behälter zuverlässig durch die gegenüberliegenden, horizontalen Streben aufgenommen und geführt. Wenn beispielsweise beim Bearbeiten eines Speisenbestandteils wie z.B. dem Schneiden eines Stückes Fleisch auf dem Brett eine Kraft quer zur Längsrichtung des Rahmens auf das Brett wirkt, stößt das Brett mit dessen Vorsprung gegen die in Richtung der Kraftwirkung liegende horizontale Strebe. Wenn beispielsweise beim Ablegen eines Speisenbestandteils in dem Behälter z.B. durch schwungvolles Hineinbewegen eines Stückes Fleisch in die Wanne des Behälters eine Kraft quer zur Längsrichtung des Rahmens auf den Behälter wirkt, stößt der Behälter mit dessen Vorsprung, also der Außenwand der Wanne, gegen die in Richtung der Kraftwirkung liegende horizontale Strebe. Ein zuverlässiges Halten des Brettes bzw. des Behälters durch die Behälteraufnahmeeinrichtung kann so gewährleistet werden. Insbesondere ist ein Einsatzgestell vorgesehen, das weiter unten genauer erläutert wird. Das Einsatzgestell hat in einer Ausgestaltung an einer Unterseite einen vertikal nach unten erstreckenden Vorsprung, der bevorzugt eine Spielpassung zu den gegenüberliegenden horizontalen Streben aufweist, so dass das Einsatzgestell zuverlässig aufgenommen und geführt werden kann (analog wie oben für das Brett beschrieben). An den Vorsprung des Einsatzgestells grenzen Auflageflächen zum Aufliegen auf horizontalen Streben an.

Durch den mittigen Vorsprung werden an zwei gegenüberliegenden Seiten des Brettes und/oder des Behälters bevorzugt jeweils gleich lange Auflageflächen bereitgestellt, die sich entlang des jeweiligen Randes erstrecken und/oder in Richtung zum Inneren des Rahmens im eingesetzten Zustand an den Vorsprung angrenzen. Insbesondere bildet der Vorsprung mit den Auflageflächen eine (nach unten gerichtete) Stufe.

In einer Ausgestaltung haben die gegenüberliegenden Auflageflächen des Brettes, des Einsatzgestells und/oder des Behälters eine gleiche oder geringe Ausdehnung als die horizontalen Streben, so dass im eingesetzten Zustand das Brett und/oder der Behälter nicht oder nur unwesentlich über den Rahmen seitlich übersteht. Ein nur unwesentlicher Überstand kann ungefähr im Umfang des Spiels sein, dass im eingesetzten Zustand zwischen dem Vorsprung und den horizontalen Streben vorgesehen ist.

In einer Ausgestaltung hat das Brett, der Behälter und/oder das Einsatzgestell eine im Wesentlichen rechteckige Form. Das Brett hat besonders bevorzugt eine quadratische Form. Die Rechteckform und/oder quadratische Form bezieht sich insbesondere auf die Außenkontur von oben betrachtet, wenn das Brett bzw. der Behälter in einer horizontalen Ebene eingesetzt sind, insbesondere in die Behälteraufnahmeeinrichtung. Eine rechteckige Form kann abgerundete Kanten und Ecken umfassen, damit sich ein Benutzer daran nicht verletzt. Insbesondere ist das Regalsystem so eingerichtet, dass ein quadratisches Brett in senkrecht zueinander gedrehten Positionen in einer horizontalen Ebene eingesetzt werden kann

In einer Ausgestaltung hat das Brett und/oder der Behälter entlang des bevorzugt gesamten umlaufenden Randes und/oder an allen vier Seiten eine Auflagefläche und/oder Absätze. Die Absätze und/oder Auflageflächen an der Unterseite zum Aufliegen auf einer horizontalen Strebe grenzen zur Mitte hin an den Vorsprung an. Insbesondere ist ein Brett und/oder ein Behälter - bevorzugt relativ zu einer Achse in Richtung von dessen Länge und/oder Breite - symmetrisch, insbesondere spiegelsymmetrisch aufgebaut. Die Länge und Breite wird im eingesetzten Zustand in einer horizontalen Ebene gemessen.

In einer Ausgestaltung ist die Länge des Brettes und/oder des Behälters mehr als zehnmal größer als die Ausdehnung eines Absatzes oder einer Auflagefläche in Richtung der Länge. In einer Ausgestaltung entspricht die Tiefe des Vorsprungs des Brettes weniger als der hälfte oder weniger als einem Viertel der Dicke des Brettes. Insbesondere ist die Tiefe des Vorsprungs des Brettes gleich oder geringer als der Versatz von der Zusatzstrebe zur horizontalen Strebe und/oder von dem Haltestift zur horizontalen Strebe. Das Brett kann somit in sicherer und geführter Weise anstelle des Grills in die Grillaufnahmeeinrichtung eingesetzt werden. Eine doppelte Platzausnutzbarkeit wird so ermöglicht. Das Brett kann ebenso auf zwei gegenüberliegende horizontale Streben aufgelegt und somit in die Behälteraufnahmeeinrichtung eingesetzt werden, wenn sich dort keine Behälter befinden. Eine doppelte Platzausnutzbarkeit wird so auch hier ermöglicht.

Besonders bevorzugt ist die Tiefe des Vorsprungs des Brettes gleich oder geringer als die Summe aus dem Versatz der Zusatzstrebe zur horizontalen Strebe und einer Dicke des Absatzes des Endes eines Behälters. Wenn ein Behälter im eingesetzten bzw. eingehangenen Zustand mit den Absätzen auf den Zusatzstreben aufsitzt und somit in der Behälteraufnahmeeinrichtung eingesetzt ist, kann darüber ein Brett zusätzlich aufgenommen werden, dass auf den gegenüberliegenden horizontalen Streben mit dessen Auflageflächen aufliegt. Eine in dem Behälter aufgenommene Speise oder ein dort aufbewahrter Speisenbestandteil kann so durch das Brett überdeckt und das Brett gleichzeitig zur Bearbeitung eines Speisenbestandteils auf dessen Oberseite verwendet werden.

In einer Ausgestaltung ist der Vorsprung des Brettes ein nach unten ragender Vorsprungfuß und/oder eine mindestens vier oder genau vier Vorsprungfüße werden anstelle eines mittigen Vorsprungs eines Brettes realisiert. Insbesondere grenzen die Vorsprungfüße an den Auflageflächen an, die sich an der Unterseite des Brettes befinden. Insbesondere sind die Vorsprungfüße bündig in Ecken angeordnet, die durch sich zwei senkrecht treffende Auflageflächen entlang des umlaufenden Randes des Brettes gebildet werden. Insbesondere gibt es vier solcher Ecken an der Unterseite eines Brettes. Insbesondere sind die Vorsprungfüße entlang und/oder in allen Ecken einer imaginären, rechteckförmigen Konturlinie, bevorzugt einer quadratisch verlaufenden Konturlinie angeordnet. Vorzugsweise verläuft diese Konturlinie an der zur Mitte des Brettes liegenden Seite der Auflageflächen mit ausgeblendeten Vorsprungfüßen. Im Falle eines mittigen Vorsprungs verliefe entlang der Konturlinie insbesondere eine Kante, insbesondere umlaufende Kante, des mittigen Vorsprungs. Die Vorsprungfüße sind derart angeordnet, dass wenn zwei Bretter mit gleicher Länge und Breite - ein Brett mit einem mittigen Vorsprung und das andere Brett mit vier Vorsprungfüßen - jeweils mit der Unterseite (außen bündig) aneinander gelegt würden, die äußeren vier Ecken des mittigen Vorsprungs jeweils in Längsrichtung und quer dazu mindestens an einer Stelle bündig mit den jeweils darauf aufliegenden vier Vorsprungfüße des anderen Bretts wären. Die Vorsprungfüße können eckig oder zylinderförmig sein. Wenn die Vorsprungfüße eckig sind, entspräche der Raum, der sich zwischen allen Vorsprungfüßen erstreckt, dem Volumen des mittigen Vorsprungs eines Brettes mit mittigem Vorsprung. Ein quadratischer Vorsprung und/oder Vorsprungfüße an den Ecken einer imaginären quadratischen Konturlinie haben den Vorteil, dass ein Einsetzen in Längsrichtung und quer zur Längsrichtung in einer horizontalen Ebene möglich ist und/oder die Vorsprungfüße im eingesetzten Zustand eine Spielpassung zu gegenübergesetzten horizontalen Streben aufweisen, auf denen die Auflageflächen des Brettes im eingesetzten Zustand aufliegen. Insbesondere haben die Vorsprungfüße und/oder ein mittiger Vorsprung ein rutschfestes Material, insbesondere Gummi, an der Unterseite. Zugleich wird ermöglichst, dass auf der Oberseite des Brettes ein Speisenbestandteil bearbeitet wird, der gleichzeitig unter dem Brett in dem Behälter aufbewahrt wird, wobei durch die oben erläuterte Ausgestaltung das in geführter Weise (in Längsrichtung des Rahmens) seitlich verschoben werden kann, um einen Speisenbestandteil zur Bearbeitung auf dem Brett aus dem Behälter zu entnehmen oder einen auf dem Brett bearbeiteten Speisenbestandteil in den darunter liegenden Behälter zu geben.

In einer Ausführungsform entspricht ein lichter Abstand zwischen den zwei Zusatzstreben in Längsrichtung des Rahmens dem lichten Abstand zwischen zwei sich gegenüberliegenden, horizontalen Streben quer zur Längsrichtung.

Ein lichtes Maß, z.B. ein lichter Abstand, ist eine Durchgangsweite. Ein lichter Abstand ist der kleinste Abstand. Ein Gegenstand mit einer Ausdehnung, die dem lichten Abstand entspricht, kann ohne Kollision hindurchgeführt werden, z.B. durch zwei sich gegenüberliegenden horizontalen Streben, zwischen denen der lichte Abstand gemessen wurde.

Dadurch, dass der lichte Abstand zwischen den zwei Zusatzstreben in Längsrichtung des Rahmens dem lichten Abstand zwischen zwei sich gegenüberliegenden, horizontalen Streben quer zur Längsrichtung entspricht, kann ein Behälter wahlweise in Längsrichtung des Rahmens oder quer zur Längsrichtung in die Behälteraufnahmeeinrichtung eingesetzt werden. Eine für den Benutzer besonders komfortable Flexibilität in der Anordnungsweise der Behälter nach dem jeweiligen und aktuellen Bedarf für die Zubereitung der gewünschten Speise kann so ermöglicht und ein zeitlich besonders effizientes Zubereiten der Speise ermöglichst werden.

In einer Ausgestaltung sind mehrere Behälter vorgesehen, deren Länge, die größer oder gleich deren Breite ist, zum Einsetzen zwischen zwei gegenüberliegende horizontale Streben angepasst ist und/oder deren Vorsprung eine Länge hat, die größer oder gleich der Breite des Vorsprungs ist und zum Einsetzen zwischen zwei gegenüberliegende horizontale Streben angepasst ist.

Insbesondere ist einer der mehreren Behälter vorgesehen, dessen Breite und Länge gleich sind und/oder bei dem die Länge des mittigen Vorsprungs und die Breite des Vorsprungs gleich sind. In die Behälteraufnahmeeinrichtung bzw. auf gegenüberliegende horizontale Streben können bevorzugt insgesamt zwei solcher Behälter in einer horizontalen Ebene eingesetzt werden.

Insbesondere ist einer der mehreren Behälter vorgesehen, dessen dreifache Breite dem lichten Abstand zwischen zwei gegenüberliegenden horizontalen Streben insbesondere abzüglich einer Spielpassung entspricht. Auf diese Weise können bis zu drei Stück dieser Behälter nebeneinander wahlweise entweder in Längsrichtung des Rahmens (mithilfe der Zusatzstreben) oder quer zur Längsrichtung in die Behälteraufnahmeeinrichtung eingesetzt werden. Wenn drei solcher Behälter quer zur Längsrichtung eingesetzt werden, grenzen insbesondere ein oder zwei Zusatzstreben an die äußeren Behälter an. In die Behälteraufnahmeeinrichtung bzw. auf gegenüberliegende horizontale Streben können bevorzugt insgesamt sechs solcher Behälter in einer horizontalen Ebene eingesetzt werden.

In einer Ausgestaltung kann ein Behälter als eine Spüle oder Waschbecken (vorzugsweise aus Metall oder Blech) mit einem Auslass in der Wanne und/oder einer Wasserzuführung eingerichtet sein.

In einer Ausgestaltung umfasst die Behälteraufnahmeeinrichtung ein Einsatzgestell mit mehreren Aufnahmeöffnungen für Behälter. Wie oben bereits erläutert, hat das Einsatzgestell bevorzugt einen Vorsprung und daran angrenzende Auflageflächen an der Unterseite. Das Einsatzgestellt kann auf bevorzugt gegenüberliegende horizontale Streben aufgelegt und hierdurch in die Behälteraufnahmeeinrichtung eingesetzt werden. Insbesondere verfügt das Einsatzgestell über jeweils gleich lange Auflageflächen, die sich entlang des jeweiligen Randes erstrecken und/oder in Richtung zum Inneren des Rahmens im eingesetzten Zustand an den Vorsprung angrenzen. Insbesondere bildet der Vorsprung mit den Auflageflächen eine (nach unten gerichtete) Stufe. Vorzugsweise erstreckt sich eine geschlossene Auflagefläche um den gesamten Rand des Einsatzgestells. In einer Ausgestaltung erstreckt sich auch bei dem Brett eine geschlossene Auflagefläche um den gesamten Rand. In einer Ausgestaltung umfasst das Einsatzgestellt für den Benutzer nicht zum manuellen Lösen vorgesehene Einsatzstreben mit den unten beschriebenen Merkmalen. Die schließt neben den Abmessungen auch beispielsweise die enge Anordnung zweier paralleler Einsatzstreben ein. Jedes der Merkmale bildet eine eigene Ausführungsform.

Vorzugsweise stellt das Einsatzgestellt mindestens eine Reihe und/oder höchstens fünf Reihen mit nebeneinander angeordneten Aufnahmeöffnungen bereit. Vorzugsweise stellt das Einsatzgestellt mindestens eine Spalte und/oder höchstens fünf Spalten mit nebeneinander angeordneten Aufnahmeöffnungen bereit. Besonders bevorzugt ist ein Einsatzgestellt mit drei Reihen und drei Spalten zur Aufnahme von maximal neun Behältern vorgesehen. Die Behälter sind jeweils an die Aufnahmeöffnungen angepasst, derart, dass beim Einsetzen von oben eine Wanne des Behälters die Aufnahmeöffnung nach unten passiert, bis mindestens zwei gegenüberliegende Auflageflächen des Behälters auf einen Rand der Aufnahmeöffnung trifft und darauf aufliegt. In einer Ausgestaltung handelt es sich bei den Behältern um genormte GN Behälter bzw. Behälter mit Abmessungen gemäß der GN Norm. Vorzugsweise ist das Regalsystem, der Rahmen und/oder die Behälteraufnahmeeinrichtung an die Abmessungen der Behälter angepasst.

In einer Ausgestaltung umfasst die Behälteraufnahmeeinrichtung eine Einsatzstrebe, die in Längsrichtung des Rahmens mit einer Zusatzstrebe, bevorzugt mit genau zwei Zusatzstreben, verbunden werden kann. Die Einsatzstrebe bildet gemeinsam mit der Zusatzstrebe eine T- oder Kreuz-Form. Die auf diese Weise erzeugten Aufnahmeöffnungen können zur Aufnahme von Behältern verwendet werden. Insbesondere überlappen die Auflageflächen von zwei (quer zur Längsrichtung) benachbarten Behältern in einem Bereich, in dem die untere der Auflageflächen eines der beiden benachbarten Behälter auf der Einsatzstrebe aufliegt. In einer alternativen oder ergänzenden Ausgestaltung ist die Einsatzstrebe so breit wie oder breiter als zwei Auflageflächen, so dass die in einer horizontalen Ebene aneinander angrenzenden Auflageflächen von zwei (quer zur Längsrichtung) benachbarten Behältern ohne zu überlappen auf der Einsatzstrebe aufliegen, wenn diese in Aufnahmeöffnungen eingesetzt sind, die durch die Einsatzstrebe und eine Zusatzstrebe bereitgestellt ist. In einer alternativen oder ergänzenden Ausgestaltung sind zwei Einsatzstrebe mit einem engen Abstand nebeneinander und/oder parallel zueinander vorgesehen, so dass zwei benachbarte Behälter (quer zur Längsrichtung) mit in einer horizontalen Ebene aneinander angrenzenden Auflageflächen jeweils auf einer Einsatzstrebe aufliegen, ohne zu überlappen. Vorzugsweise beträgt der enge Abstand weniger als die dreifache oder fünffache Breite (oder Durchmesser) der Einsatzstrebe.

Insbesondere ist die Einsatzstrebe mit einem Ende oder mit beiden Enden jeweils mit einer Zusatzstrebe verbunden, vorzugsweise durch eine manuell lösbare, formschlüssige Verbindung, besonders bevorzugt durch ein Einhängen von oben in eine bereits eingesetzte Zusatzstrebe. Insbesondere weist ein Ende oder beide Enden der Einsatzstrebe eine Kontur zum Einhaken auf, vorzugsweise eine (umgedrehte) U-Form. Vorzugsweise weist die Zusatzstrebe eine an die Kontur zum Einhaken der Einsatzstrebe angepasste Aufnahme-Kontur auf, so dass die Kontur zum Einhaken in die Aufnahme-Kontur eingehakt werden kann. Insbesondere verhindert die Verbindung der Zusatzstrebe und der Einsatzstrebe im eingehakten Zustand ein Verschieben der Einsatzstrebe quer zu dessen Längsachse und/oder quer zur Längsrichtung des Rahmens. Die U-Form oder Hakenform erstreckt sich in diesem Fall in Richtung der länglichen Ausdehnung der Einsatzstrebe und/oder die Zusatzstrebe hat ein oder zwei nach oben offene Nuten quer zur länglichen Ausdehnung der Zusatzstrebe. Besonders bevorzugt hat die Zusatzstrebe eine umlaufende Nut und/oder die Einsatzstrebe hat eine gekrümmte Aussparung. Insbesondere ist die Aussparung nach unten gerichtet, insbesondere mit einem konstanten Bogenradius, der vorzugsweise dem Radius der umlaufenden Nut der Zusatzstrebe entspricht.

In einer besonders bevorzugten Ausgestaltung ist die Nut quer zur länglichen Ausdehnung der Zusatzstrebe um den gesamten Umfang der Zusatzstrebe umlaufend und/oder so breit wie die Einsatzstrebe oder dessen Kontur zum Einhaken. Die Einsatzstrebe wird auf diese Weise im verbundenen Zustand von den gegenüberliegenden Nutwangen (d.h., Nutwänden) gegen ein Verschieben in Richtung der Länge der Zusatzstrebe fixiert und/oder gehalten.

In einer Ausgestaltung wird eine Einsatzstrebe an eine horizontale Strebe angrenzend angeordnet und/oder mit der Zusatzstrebe verbunden. Insbesondere entspricht die Nut dann einem Freistich und/oder die eingesetzte Einsatzstrebe wird gegen eine Verschiebung in Richtung der Länge der Zusatzstrebe zur einen Seite durch die horizontale Strebe und zur anderen Seite von der Freistichwange gehalten, also an der Wange, die durch den unterschiedlichen Durchmesser des Freistiches (bzw. der Nut) und der Zusatzstrebe entsteht.

In einer Ausgestaltung sind die Nut und/oder der Freistich so tief (oder mit einem derart reduzierten Durchmesser verglichen mit dem Durchmesser der Zusatzstrebe), dass eine Oberseite der Zusatzstrebe auf eine gleiche Höhe in vertikaler Richtung liegt und/oder nach oben bündig ist mit der Einsatzstrebe. Auf diese Weise kann verbessert erreicht werden, dass z.B. ein eingesetztes Brett mit darunter eingesetzten Behältern das Brett nicht berührt.

Alternativ oder ergänzend verhindert die Verbindung der Zusatzstrebe und der Einsatzstrebe im eingehakten Zustand ein Verschieben der Einsatzstrebe in dessen Längsachse und/oder in Längsrichtung des Rahmens. Die U-Form oder Hakenform erstreckt sich in diesem Fall quer zur Richtung der länglichen Ausdehnung der Einsatzstrebe und/oder die Zusatzstrebe hat ein oder zwei nach oben offene Nuten (oder bei einer stabförmigen Zusatzstrebe seitliche, ebene Einschnittflächen wie bei einem Mehrkant) in Richtung der länglichen Ausdehnung der Zusatzstrebe.

Vorzugsweise ist die Tiefe der Nuten oder des Freistiches gleich oder weniger als die Hälfte des Durchmessers der Zusatzstrebe. Vorzugsweise beträgt die Elementdicke, z.B. Blechdicke, der Einsatzstrebe und/oder der Kontur zum Einhaken an einem Ende oder beiden Enden der Einsatzstrebe (wie oben bereits erwähnt) mindestens 0,5 mm und/oder höchstens 1,5 mm. Insbesondere ist die Einsatzstrebe ein Profilbauteil, vorzugsweise ein U-Profil. Alternativ oder ergänzend kann die Einsatzstrebe ein Stab, sein der ein oder zwei profilförmige Ende aufweist. Vorzugsweise sind an einem Zusatzstab mindestens ein, genau zwei und/oder höchstens drei oder fünf Aufnahme-Kontur (für eine entsprechende Anzahl von verbindbaren Einsatzstreben) vorgesehen.

Das Regalsystem ist so beschaffen, dass das Brett mit dem mittigen Vorsprung ohne Berührkontakt oder ohne eine Übertragung einer Last (im unbelasteten und/oder ausgelieferten Zustand des Brettes) auf einen Behälter auf zwei gegenüberliegenden horizontalen Streben aufliegen kann, wenn gleichzeitig darunter ein Behälter auf Zusatzstreben und/oder Einsatzstreben aufliegt.

In einer Ausgestaltung ist die Zusatzstrebe ungefähr nach unten bündig mit einer damit verbundenen horizontalen Strebe angeordnet, vorzugsweise mit einem Abstand von mindestens 0,3 mm zwischen der Unterseite der Zusatzstrebe und der Unterseite der horizontalen Strebe. Besonders bevorzugt beträgt der Durchmesser oder eine vertikale Ausdehnung der Zusatzstrebe weniger als die Hälfte oder weniger als 40% der vertikalen Ausdehnung einer damit verbundenen horizontalen Strebe. Auf diese Weise kann verbessert erreicht werden, dass z.B. ein eingesetztes Brett mit darunter eingesetzten Behältern das Brett nicht berührt.

In einer Ausführungsform umfasst das Regalsystem einen Haken für Zubehör, der an dem Rahmen lösbar und/oder formschlüssig manuell angebracht werden kann. Insbesondere ist der Haken und/oder ein Schale so beschaffen, dass das eine vorzugsweise kleine Schale für Kräuter oder zusätzliche Speisenbehälter mit dem Haken aufgenommen werden können, vorzugsweise in einer außen am Rahmen abstehenden Art und Weise.

In einer Ausführungsform umfasst das Regalsystem im Bodenbereich des Rahmens an einem Ende in Längsrichtung ein Rad zum Bewegen des Rahmens und/oder an dem gegenüberliegenden Ende in Längsrichtung einen nicht beweglichen Fuß zum Abstützen des Rahmens auf einem Untergrund umfasst. Die Flexibilität wird so erhöht. Insbesondere ist das Rad an dem Ende angeordnet, das am nächsten zur Grillaufnahmeeinrichtung und/oder einem eingesetzten Grill gelegen ist. Ein durch einen eingesetzten Grill erhöhtes Gewicht kann auf diese Weise zu einem größeren Anteil auf das Rad gelegt werden. In einer Ausgestaltung steht der Rahmen im betriebsbereiten Zustand auf Füßen auf. Insbesondere sind die Füße höhenverstellbar, vorzugsweise mithilfe eines im unteren Bereich des Fußes angebrachten und/oder von unten in den Fuß gesteckten oder geschraubten Nivellierfuß. Insbesondere ist der Nivellierfuß mindestens 5 und/oder höchstens 30 mm hoch. In einer Ausgestaltung sind an beiden Enden des Rahmens jeweils zwei Füße vorgesehen, vorzugsweise baugleiche Füße. insbesondere erstreckt sich ein Fuß vertikal nach unten und/oder hat ein Querschnittsprofil wie eine vertikale Strebe. Vorzugsweise ist der Fuß ein an einem Bodenbereich des Rahmens nach unten überstehender Abschnitt einer vertikalen Strebe. Vorzugsweise sind in Längsrichtung und/oder quer zur Längsrichtung die Füße symmetrisch am Rahmen angeordnet. In einer Ausgestaltung ist das Rad mit dem Rahmen verbunden, vorzugsweise mithilfe einer Drehachse. Die Drehachse kann auch eine Drehwelle sein. In einer Ausgestaltung ist das Rad so angeordnet, dass das Rad einen Fuß von außen betrachtet vollständig oder teilweise verdeckt, insbesondere quer zur Längsrichtung betrachtet verdeckt. In einer Ausgestaltung ist vorgesehen, das ein Rad, das einen Fuß des Rahmens von außen betrachtet verdeckt, einen solchen Radius hat, dass in einer Betriebsstellung des auf einem Untergrund ruhenden Rahmens das Rad auf dem Untergrund aufsteht und/oder der Fuß durch das Rad vom Untergrund beabstandet wird. Vorzugsweise ragt das Rad mindestens 10 mm, bevorzugt mindestens 50 mm, nach unten an dem Fuß hervor, den das Rad von außen betrachtet verdeckt. In einer bevorzugten Ausgestaltung wird an dem Fuß, der von dem Rad vollständig oder teilweise verdeckt wird oder dessen Stützfunktion von dem Rad übernommen wird, der Nivellierfuß. In einer Ausgestaltung ist das Hervorstehen des Rades nach unten an dem Fuß, dessen Stützfunktion das Rad für den Fuß ersetzt, so dimensioniert, dass durch eine Kippbewegen um die Drehachse des Rads der Fuß nicht den Untergrund berührt. Hierdurch können baugleiche Rahmen für eine Variante mit Rad und eine Variante ohne Rad genutzt werden. Insbesondere sind zwei Räder für einen Rahmen vorgesehen.

Alternativ oder ergänzend kann grundsätzlich vorgesehen sein, das Regalsystem so einzurichten oder andere Behälter mit unterschiedlichen Abmessungen zu verwenden, dass das Brett einen darunter eingesetzten Behälter berührt oder darauf aufliegt. In einer Ausgestaltung wird umfasst die Grillaufnahmeeinrichtung eine Platte oder Blech mit Loch zur Aufnahme eines Grills. Die Platte oder das Blech können dann auf zwei oder drei horizontalen Streben aufliegen, vorzugsweise mit einem Vorsprung als Führung. Alternativ oder in Kombination mit der Platte oder dem Blech kann eine Grillaufnahmeeinrichtung ein Strukturelement aufweisen, die den Aufbau des Einsatzgestells mit einem Außenrahmen und/oder Strebenelementen hat.

Insbesondere ist die Grillaufnahmeeinrichtung und/oder die Haltestifte auf der obersten horizontalen Ebene des Rahmens angeordnet. Vorzugsweise sind auf der horizontalen Ebene des Rahmens mit der Grillaufnahmeeinrichtung und/oder auf mehreren horizontalen Ebenen des Rahmens Zusatzstreben, eingesetzte Behälter und/oder eingesetzte Bretter vorgesehen. Das Regalsystem hat eine besonders große Variabilität und kann modular mit den Behältern und Brettern auf viele unterschiedliche Weise sowie leicht veränderbar zum Zubereiten von Speisen eingerichtet werden.

Die Definitionen, Merkmale und Ausgestaltungen des oben beschriebenen Aspekts der Erfindung können auch auf die folgenden drei Aspekt der Erfindung angewendet und damit kombiniert werden.

Ein weiterer Aspekt der Erfindung betrifft eine Grillaufnahmeeinrichtung zur Aufnahme eines Grills, vorzugsweise mit mindestens einem Haltestift der Grillaufnahmeeinrichtung.

Ein weiterer Aspekt der Erfindung betrifft eine Behälteraufnahmeeinrichtung zur Aufnahme mindestens eines Behälters für die Speise oder Speisenbestandteile, vorzugsweise mit einer Zusatzstrebe zum Aufnehmen eines Endes eines Behälters.

Ein weiterer Aspekt der Erfindung betrifft ein Einsatzgestellt zur Aufnahme mehrerer Behälter in Aufnahmeöffnungen des Einsatzgestells.

Nachfolgend werden Ausführungsbeispiele der Erfindung auch anhand von Figuren näher erläutert. Die Bezugszeichen werden einheitlich in allen Figuren verwendet. Die in den Figuren gezeigten Ausführungsbeispiele sind dennoch unabhängig voneinander und Merkmale der Ausführungsbeispiele können einzeln oder in einer Mehrzahl mit den beanspruchten Gegenständen und/oder den oben beschriebenen Aspekten kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung eines Rahmens eines Regalsystem sowie eine Grillaufnahmeeinrichtung und eine Behälteraufnahmeeinrichtung;
- Figur 2:: Schematische Darstellung eines Rahmens, einer Grillaufnahmeein-richtung und einer Behälteraufnahmeeinrichtung, insb. der Fig. 1;
- Figur 3:: Schematische Darstellung eines Regalsystems;
- Figur 4:: Schematische Darstellung eines Regalsystems der Fig. 3 ohne ein Brett, ohne einen Grill und ohne eingesetzte Behälter;
- Figur 5:: Schematische Darstellung eines Haltestiftes;
- Figur 6:: Regalsystem mit einem ersten Grill;
- Figur 7:: Regalsystem mit einem zweiten Grill;
- Figur 8:: Schnittdarstellung durch einen Haltestift, der einen Grill stützt;
- Figur 9:: Schnittdarstellung durch einen Haltestift mit einem Brett darüber;
- Figur: 10:Schematische Darstellung eines Brettes für das Regalsystem;
- Figur 11:: Schematische Darstellung einer Grillaufnahmeeinrichtung mit einem Haltestift mit einer Biegung;
- Figur 12:: Schematische Darstellung eines Einsatzgestells mit mehreren Aufnahmeöffnungen für Behälter;
- Figur 13:: Schematische Darstellung einer Behälteraufnahmeeinrichtung mit Einsatzstreben mit ausgeblendeten Behältern;
- Figur 14:: Schematische Darstellung einer Behälteraufnahmeeinrichtung mit Einsatzstreben mit eingesetzten Behältern;
- Figur 15:: Schematische Darstellung eines Einhakens einer Einsatzstrebe in eine Zusatzstrebe; und
- Figur 16:: Darstellung eines Behälters mit Wasserzufuhr und Auslass.

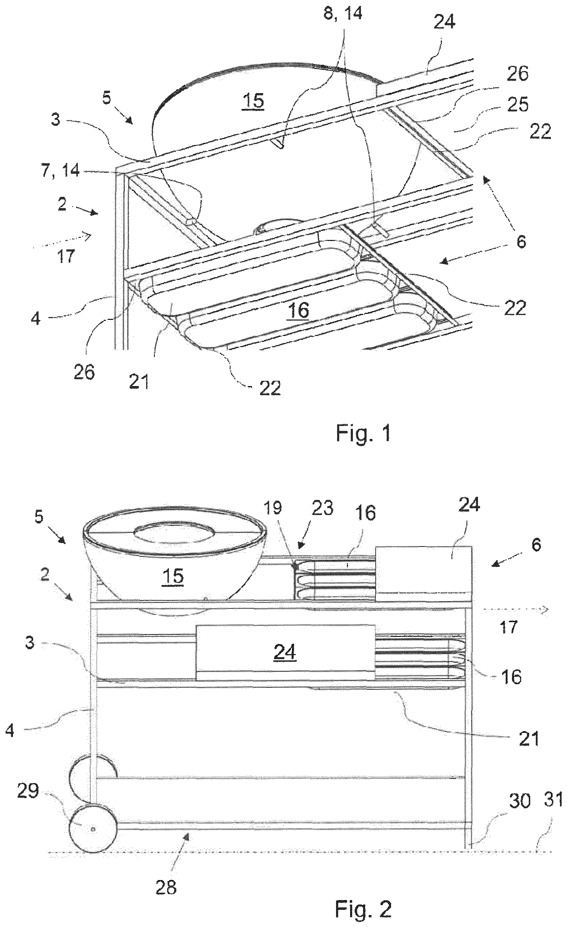

Die Figur 1 zeigt ein Regalsystem 1 zur Verwendung für das Zubereiten einer Speise insbesondere im Außenbereich, z.B. im Garten. Ein Rahmen 2 besteht im Wesentlichen aus horizontalen Streben 3 und vertikalen Streben 4. In einer von der Fig. 1 unabhängigen Ausgestaltung können auch diagonale Verstärkungsstreben vorgesehen werden, die vorliegend nicht dargestellt sind. Die Fig. 1 zeigt ferner eine Grillaufnahmeeinrichtung 5 zur Aufnahme eines Grills 15. Die Fig. 1 zeigt ferner eine Behälteraufnahmeeinrichtung 6 zur Aufnahme mindestens eines Behälters 16 für die Speise oder Speisenbestandteile in einer Wanne 21 des Behälters 16. Der Rahmen 2 erstreckt sich in eine Längsrichtung 17, in welcher die Länge größer ist als die Breite des Rahmens, die quer zur Längsrichtung in einer horizontalen Ebene mit der Längsrichtung gemessen wird. Insbesondere ist die Breite kleiner als die Höhe des Rahmens 2. Ein insbesondere halbkugelartiger Grill 15 ist in der Grillaufnahmeeinrichtung 5 aufgenommen, die insbesondere aus drei Haltestiften 7, 8 besteht. Ein erster Haltestift 7 mit einer quer zur Längsrichtung 17 orientierten horizontalen Strebe vorzugsweise T-förmig verbunden. Zwei weitere Haltestifte 8 sind mit gegenüberliegenden und sich in Längsrichtung 17 erstreckenden horizontalen Streben 3 verbunden, vorzugsweise in einer Position in Längsrichtung 17, die im Bereich eines Drittels der Länge des Rahmens entspricht. Vorzugsweise sind die beiden Haltestifte 8 T-förmig mit den horizontalen Streben 3 verbunden und/oder sind beide länger verglichen mit dem ersten Haltestift 7. Alle Haltestifte 7, 8 sind bevorzugt geradlinig und stabförmig. Bevorzugt liegt der Grill 15 auf drei Stellen 14 mit Berührkontakt zu der Grillaufnahmeeinrichtung 5, insbesondere den Haltestiften 7, 8 auf.

Die obere horizontale Ebene des Rahmens 2, die durch die horizontalen Streben 3 gebildet und/oder definiert wird, weist ein Brett 24 auf. Seitliche Auflageflächen 26 des Brettes 24 an dessen Unterseite umgeben einen mittigen Vorsprung 25, derart, dass das Brett 24 mit den Auflageflächen 26 auf der Oberseite sich gegenüberliegender horizontaler Streben 3 aufliegt und der Vorsprung 25 eine Führung gegen ein Verschieben des Brettes 25 quer zur Längsrichtung 17 bildet. Ein Verschieben des Brettes 24 in Längsrichtung 17 ist hingegen erwünscht, damit unter dem Brett 25 vom Benutzer nach Bedarf eingesetzte Behälter 16 zugänglich gemacht werden können. Zur Aufnahme von Behältern 16 derart, dass ein Brett 24 darüber geschoben werden kann, sind Zusatzstreben 22 in die gegenüberliegenden horizontalen Streben 3 in der ersten und zweiten horizontalen Ebene des Rahmens 2 vorgesehen, auf denen eingesetzte Behälter mit deren Auflageflächen 26 aufliegen. Die Fig. 1 zeigt, dass eine Zusatzstrebe 22 eine quer zur Längsrichtung 17 orientierte horizontale Strebe 3 ersetzt, so dass Behälter 16 näher zum Rand des Rahmens 2 eingesetzt werden können.

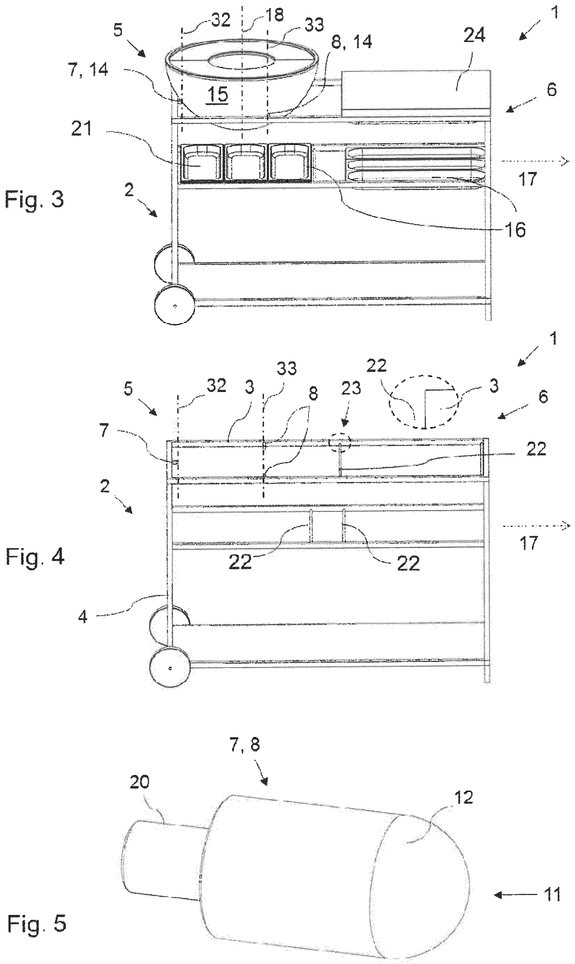

Die Figur 2 veranschaulicht eine Verschiebbarkeit des Brettes 24 (geführt mithilfe des in Fig. 1 sichtbaren Vorsprungs 25) über den in Längsrichtung 17 eingesetzten Behältern 16. Die Behälter sitzen mit Absätzen 19 an deren Enden auf der Zusatzstrebe 22 (vgl. Fig. 1) auf. Die Zusatzstrebe 22 ist mit einem Versatz 23 zur Oberseite der horizontalen Strebe 3 angeordnet, mit der die Zusatzstrebe 22 verbunden ist. Durch den Versatz wird eine Stufenform gebildet, die in Fig. 4 vergrößert gezeigt wird.

Vorzugsweise ist ein Rad 29 im Bodenbereich 28 des Rahmens 2 mit einer Drehlagerung angebracht, um den Rahmen über den Untergrund 31 zu schieben. Ein Fuß 30 sorgt für einen stabilen Stand an der gewünschten Position.

Die Figuren 3 und 4 zeigen ein Regalsystem 1. Im Unterschied zur Fig. 3 sind in Fig. 4 das Brett 24, der Grill 15 und der Behälter 16 ausgeblendet. Die Fig. 3 und 4 zeigen den Rahmen 2, eine Grillaufnahmeeinrichtung 5 zur Aufnahme eines Grills 15 mit Haltestiften 7, 8 und eine Behälteraufnahmeeinrichtung 6 zur Aufnahme mindestens eines Behälters 16 insbesondere mit Zusatzstreben 22 auf der zweiten und dritten horizontalen Ebenen. Ein mit einer Strichlinie umkreister Bereichs des von vorne und schräg oben gezeigten Regalsystems 1 ist vergrößert in einer Ansicht in Längsrichtung dargestellt, um eine Stufenform des vertikalen Versatzes 23 der Zusatzstrebe 22 zur damit verbundenen horizontalen Strebe 3 besser zu verdeutlichen.

In den Fig. 3 und 4 ist eine erste Hilfslinie 32 eingeblendet, die sich quer zur Längsrichtung 17 durch eine Stelle 14 mit Berührpunkt des ersten Haltestifts 7 mit dem Grill erstreckt. Eine zweite Hilfslinie 33 ist durch die Stellen 14 mit Berührkontakt der zwei weiteren Haltestifte 8 eingeblendet. Insbesondere verläuft die zweite Hilfslinie 33 koaxial zu den zwei weiteren Haltestiften 8, die bevorzugt gleich lang und/oder länger als der erste Haltestift 7 sind. Vorzugsweise ist die zweite Hilfslinie 33 mindestens 30 cm und/oder höchstens 50 cm von der horizontalen Strebe 3 - in der horizontalen Ebene gemessen - beabstandet, mit der der erste Haltestift 7 verbunden ist. In einer Ausgestaltung sind drei Haltestifte 7, 8 in derselben horizontalen Ebene mit drei unterschiedlichen horizontalen Streben 3 verbunden. Insbesondere hat der erste Haltestift 7 eine Länge von mindestens 1 cm und/oder höchstens 3 cm. Vorzugsweise steht der erste Haltestift 7 senkrecht von der mit dem ersten Haltestift 7 verbundenen horizontalen Strebe 3 ab und/oder verlauft über die gesamte Länge geradlinig. Ein Abstand zwischen der ersten Hilfslinie 32 und der horizontalen Strebe 3, mit der der erste Haltestift 7 verbunden ist, entspricht daher der Länge des ersten Haltestiftes 7. Die Haltestifte 7, 8 haben ein verbundenes Ende und ein freies Ende 11, das in Fig. 5 gezeigt ist.

Die Figur 5 zeigt eine vergrößerte Ansicht eines Haltestiftes 7, 8 vor dessen Montage. Der Haltestift 7, 8 hat eine längliche Zylinderform und/oder ein freies Ende 11. Insbesondere weist das freie Ende 11 des Haltestiftes 7, 8 zum Stützen eines Grills 15 eine Rundung 12 auf, insbesondere derart, dass - wie in den vorangegangenen Figuren 1 bis 3 exemplarisch illustriert - eine in die Grillaufnahmeeinrichtung 5 eingesetzter Grill 15 auf der Rundung 12 des freien Endes 11 des Haltestiftes 7, 8 aufsetzen kann, um von der Grillaufnahmeeinrichtung 5 aufgenommen zu werden.

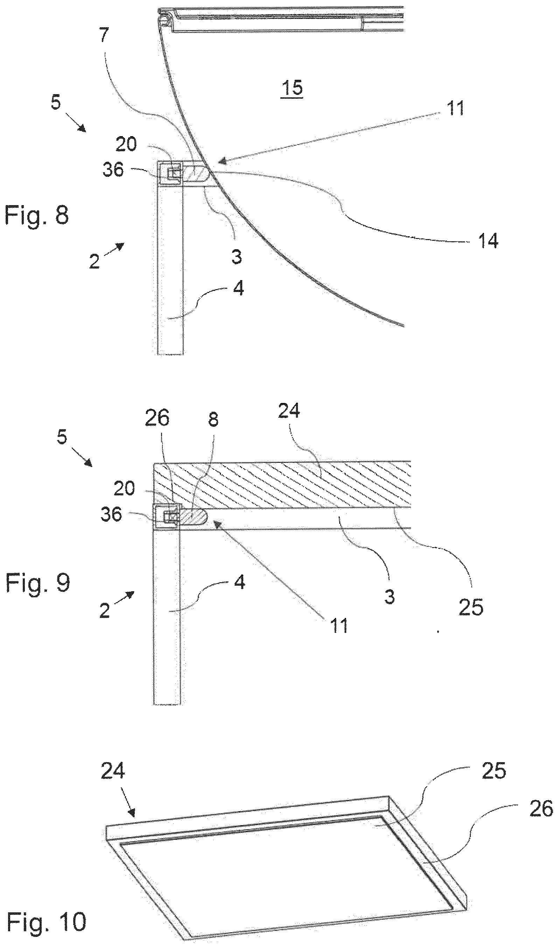

Der Haltestift einen Abschnitt mit einem geringeren Durchmesser und/oder mit einem Außengewinde 20 an dem Ende, das dem freien Ende 11 gegenüberliegt. Mit dem Außengewinde 20 kann der Haltestift in eine Vertiefung mit einem Innengewinde einer horizontalen Strebe 3 insbesondere manuell durch den Benutzer eingeschraubt und somit verbunden werden. In den Fig. 8 und 9 wird dies exemplarisch gezeigt.

In einer Ausgestaltung hat der halbkugelartige oder halbkugelförmige Grill einen Radius von mindestens 25 cm und/oder höchstens 40 cm, bevorzugt ungefähr 28 cm oder ungefähr 35 cm.

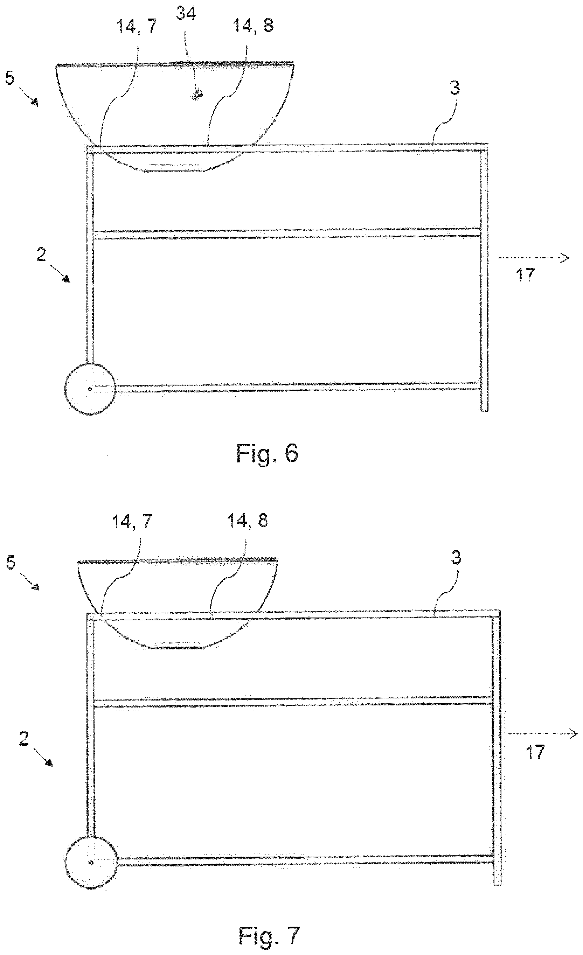

Die Figuren 6 und 7 zeigen ein Regalsystem 1 mit einem größeren ersten Grill 15 (Fig. 6) und einem kleineren zweiten Grill 15 (Fig. 7). Beide Grills 15 sind in einer Grillaufnahmeeinrichtung 5 aufgenommen, die insbesondere mit drei Haltestiften 7, 8 gebildet wird. Vorzugsweise befinden sich alle Haltestifte 7, 8 an derselben Position in den Fig. 6 und 7, die zugleich einen baugleichen Rahmen zeigen. Obwohl die Größen der Grills 15 in beiden Ausführungsbeispielen unterschiedlich groß sind, werden beide Grills 15 dennoch stabil und zuverlässig durch die Grillaufnahmeeinrichtung 5 gehalten.

In der Fig. 3 ist eine Mittelachse 18 des Grills 15 gezeigt, die sich durch dessen geometrische Mitte in Längsrichtung 17 betrachtet erstreckt, insbesondere in der horizontalen Ebene der Haltestifte 7, 8 und/oder quer zur Längsrichtung 17. Die Grillaufnahmeeinrichtung 3 ist so eingerichtet, dass sich eine erste Stelle 14 mit Berührkontakt quer zur Längsrichtung 17 betrachtet mittig relativ zum Rahmen 2 befindet und zwei weitere Stellen 14 von insgesamt drei Stellen 14 mit Berührkontakt so angeordnet sind, dass sich die zweite Stelle 14 und dritte Stelle 14 quer zur Längsrichtung 17 gegenüber liegen und in Längsrichtung 17 betrachtet eine geringe Distanz zu einer quer zur Längsrichtung 17 verlaufenden Mittelachse 18 des Grills 15 aufweisen als die erste Stelle 14.

In einer Ausführungsform, die auch in Fig. 6 gezeigt wird, befinden sich die zwei längeren Haltstifte 8 und/oder die Stellen 14 mit Berührkontakt mit den längeren Haltestiften 8 in einem Abstand von mindestens einem Zentimeter in Richtung der Längsrichtung 17 von einem Schwerpunkt 34 des Grills 15 entfernt. Vorzugsweise ist in dieser Ausführungsform der erste Haltestift 7 und/oder die Stelle 14 mit Berührkontakt zu dem ersten, kürzeren Haltestift 7 auf der anderen Seite des Schwerpunktes 34, so dass sich der Schwerpunkt 34 dazwischen befindet.

Die Figur 8 zeigt (insbesondere in einem Ausschnitt eines Regalsystems 1) einen Haltestift 7 einer Grillaufnahmeeinrichtung 5, der mit dem freien Ende 11 an einer Stelle 14 in Berührkontakt mit einem Grill 15 steht, um diesen zu stützen. Der Haltestift 7 weist ein Außengewinde 20 auf, mit dem er in ein Innengewinde 36 geschraubt ist. In einer Ausgestaltung wird das Innengewinde 36 durch einen integrierten Gewindekasten oder eine Nietmutter bereitgestellt. Das rechteckige, insbesondere quadratische Profil einer quer zur Längsrichtung 17 orientierten horizontalen Strebe 3 ist ebenfalls im Schnitt in Fig. 8 illustriert. Der Haltestift 7 bildet mit der horizontalen Strebe 3, mit der er verbunden ist, eine Stufenform auf. Das freie Ende 11 zeigt ins Innere des Rahmens 2 mit horizontalen Streben 3 und vertikalen Streben 4.

Die Figur 9 zeigt (insbesondere in einem Ausschnitt eines Regalsystems 1) einen Haltestift 8 einer Grillaufnahmeeinrichtung 5, in der sich kein Grill 15 befindet, sondern die stattdessen mit einem Brett 24 abgedeckt wird, um einen Speisenbestandteil auf dem Brett 24 zuzubereiten. Das freie Ende 11 zeigt ins Innere des Rahmens 2 und ist mit einem Außengewinde 20 am anderen Ende in ein Innengewinde 36 einer insbesondere sich in Längsrichtung 17 erstreckenden horizontalen Strebe 3 geschraubt. In einer Ausgestaltung wird das Innengewinde 36 durch einen integrierten Gewindekasten oder eine Nietmutter bereitgestellt. Das rechteckige, insbesondere quadratische Profil einer in Längsrichtung 17 orientierten horizontalen Strebe 3 ist ebenfalls im Schnitt in Fig. 9 illustriert. Der Haltestift 7 bildet mit der horizontalen Strebe 3, mit der er verbunden ist, eine Stufenform auf, wobei die Stufenhöhe ungefähr der Tiefe des Vorsprungs 25 des Brettes 24 entspricht, der mit seiner Auflagefläche 26 auf der horizontalen Strebe 3 aufliegt. Insbesondere liegt eine Spielpassung zwischen dem Vorsprung 25 und dem Haltestift 8 in vertikaler Richtung vor.

Die Figur 10 zeigt ein insbesondere quadratisches Brett 24 für ein Regalsystem. Das Brett 24 weist einen mittigen Vorsprung 25 und eine entlang des Randes umlaufende Auflagefläche 26 zum Aufliegen auf einer horizontalen Strebe 3 auf.

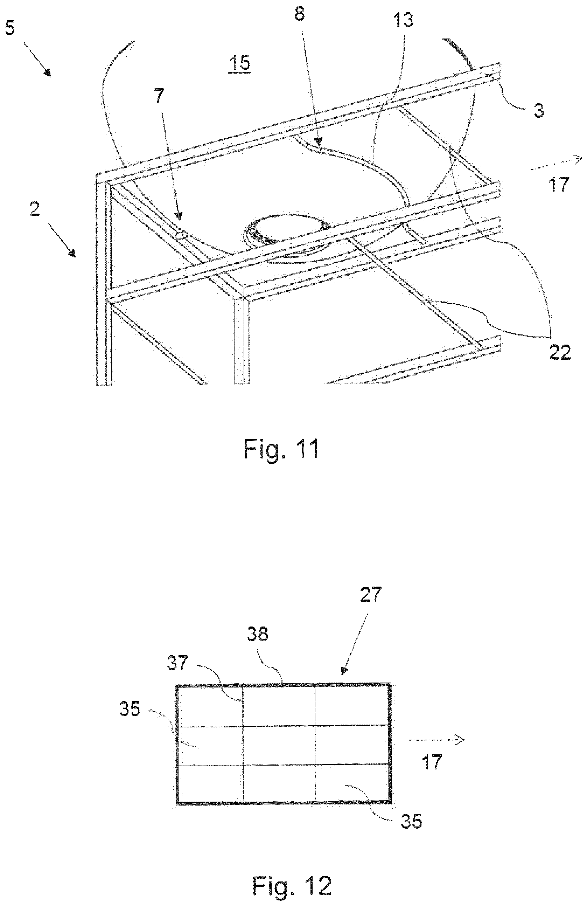

Die Figur 11 zeigt ein Ausführungsbeispiel mit einer Grillaufnahmeeinrichtung 5, die einen ersten Haltestift 7 aufweist, der bevorzugt vollständig gerade ist, und/oder einen zweiten Haltestift 8 aufweist. Insbesondere erstreckt sich der zweite Haltestift 8 zwischen zwei gegenüberliegenden horizontalen Streben 3 und/oder weist in einem mittleren Bereich eine Biegung 13 auf. Insbesondere ist der zweite Haltestift 8 bezogen auf dessen Mitte bezogen auf dessen Achse und/oder die Längsrichtung 17 des Rahmens 2 symmetrisch geformt. Vorzugsweise hat die Biegung 13 einen konstanten Radius. Ein kugelartig geformter Grill 15 kann auf diese Weise mit einer Kontaktlinie entlang der Biegung 13 auf dem Haltestift 8 aufliegen.

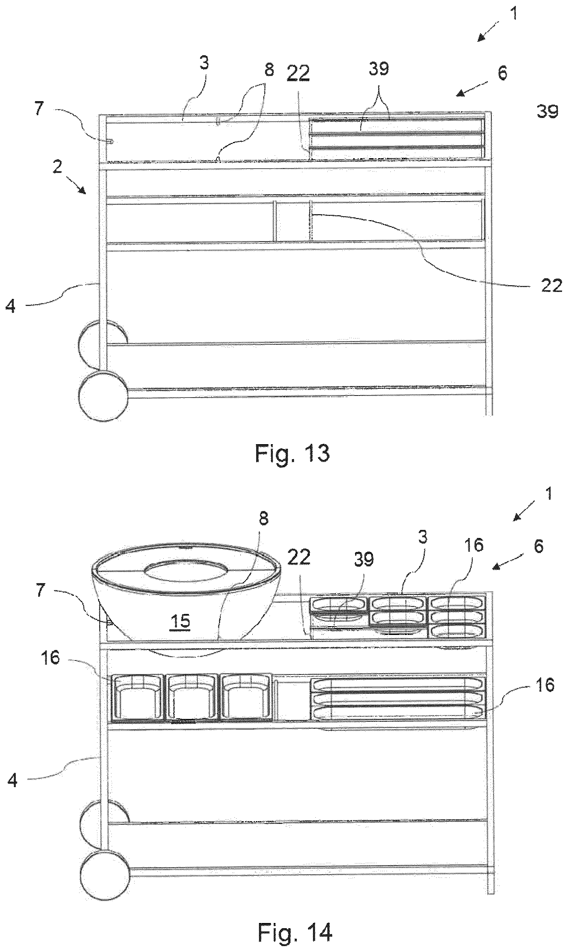

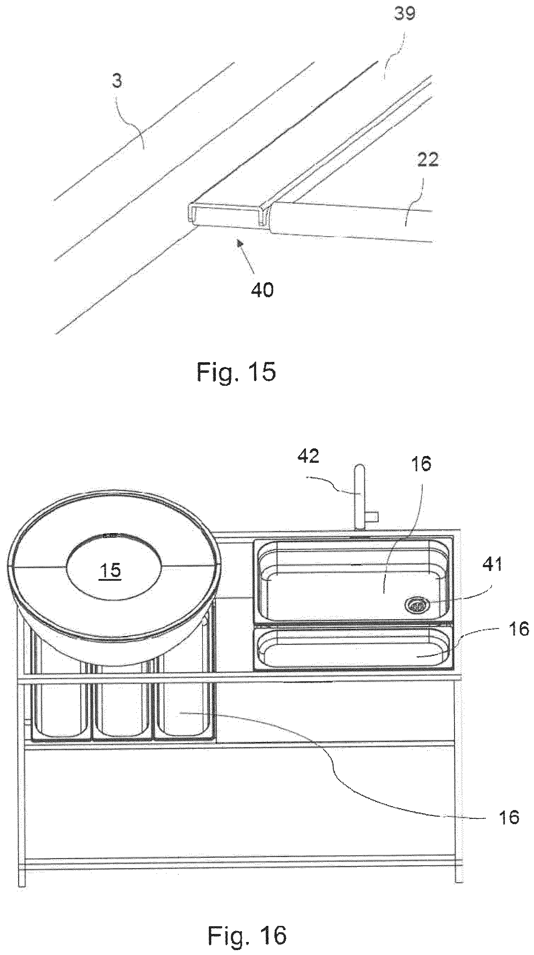

Die Figur 12 zeigt in einer Draufsicht eine abstrakte, schematische Darstellung eines Einsatzgestells 27 mit mehreren Aufnahmeöffnungen 35 zur Aufnahme von Behältern 16. Bevorzugt werden 3 x 3 (Zeilen x Spalten) Aufnahmeöffnungen durch das Einsatzgestells 27 bereitgestellt, das insbesondere auf gegenüberliegenden horizontalen Streben aufsitzen kann, um viele besonders kleinere Behälter 16 (vgl. Fig. 16) durch die Behälteraufnahmeeinrichtung 6 bzw. das Regalsystem 1 aufnehmen und bereitstellen zu können. In einer Ausführungsform ist das Einsatzgestells 27 aus für den Benutzer unlösbar (oder lösbar) miteinander verbundenen Strebenelementen 37 hergestellt, die in einem rechteckigen Außenrahmen 38 befestigt sind. In einer Weiterentwicklung sind einige Strebenelemente 37, bevorzugt im eingesetzten Zustand in Längsrichtung 17 orientierte Strebenelemente 37, oder alle Strebenelemente 37 baugleich mit den Einsatzstreben 39 der Fig. 13 und 14. Vorzugsweise werden in dieser Weiterentwicklung bereits weiter oben offenbarte Merkmale der Einsatzstreben 39 ebenfalls angewendet.

Die Figuren 13 und 14 zeigen eine Behälteraufnahmeeinrichtung 6 mit Einsatzstreben 39. im Unterschied zur Figur 14, die eingesetzte Behälter 16 zeigt, sind diese wie auch der Grill 15 in Fig. 13 ausgeblendet. Durch die Einsatzstreben 39, die für den Benutzer bevorzugt lösbar mit den Einsatzstreben 39 vorzugsweise mittels Einhaken von oben verbunden sind, können mehr Behälter 16 auf engem Raum aufgenommen werden. In dem Beispiel der Figuren 13 und 14 werden drei Reihen quer zur Längsrichtung 17 durch die Einsatzstreben 39 erzeugt, in die jeweils mindestens zwei und/oder höchstens drei oder vier Behälter 16 aufgenommen werden können.

Die Figur 15 zeigt eine Einsatzstrebe 39, die in eine Zusatzstrebe 22 eingehakt ist. Hierzu ist eine Nut 40 in die Zusatzstrebe 22 eingebracht, bevorzugt wie in Fig. 15 gezeigt in Form eines Freischnittes.

Die Figur 16 zeigt einen Behälter 16, der mit einer Wasserzuführung 42 (insbesondere mit einem Wasserhahn) und einen Auslass 41 für Schmutzwasser ausgestattet ist. Insbesondere umfasst die Wasserzuführung 42 eine nicht gezeigte, insbesondere schlauchartige Wasserleitung, die somit flexible aus dem Rahmen 2 geführt und/oder an eine Wasserquelle angeschlossen werden kann. Der Behälter 16 mit Wasserzuführung 42 kann somit flexible und modular wie die übrigen Behälter 16 ohne Wasserzuführung 42 im Regalsystem verwendet und an gewünschten Positionen in die Behälteraufnahmeeinrichtung 6 eingesetzt werden. Insbesondere ist der Auslass 41 für Wasser an eine schlauchartige Leitung für Abwasser angeschlossen, die flexible aus dem Rahmen 2 geführt werden kann.

## Patentansprüche

1. Regalsystem (1) zur Verwendung für das Zubereiten einer Speise insbesondere im Außenbereich, wobei das Regalsystem (1) einen Rahmen (2) umfasst, der im Wesentlichen aus horizontalen Streben (3) und vertikalen Streben (4) aufgebaut ist, **dadurch gekennzeichnet, dass** der Rahmen (2) eine Grillaufnahmeeinrichtung (5) zur Aufnahme eines Grills (15) und/oder eine Behälteraufnahmeeinrichtung (6) zur Aufnahme mindestens eines Behälters (16) für die Speise oder Speisenbestandteile umfasst.

2. Regalsystem (1) nach Anspruch 1, **dadurch gekennzeichnet, dass** die Grillaufnahmeeinrichtung (5) im Wesentlichen aus mindestens einem Haltestift (7, 8) und/oder höchstens drei Haltestiften (7, 8) besteht.

3. Regalsystem (1) nach dem vorhergehenden Anspruch, **dadurch gekennzeichnet, dass** der Haltestift (7, 8) zum Stützen eines in die Grillaufnahmeeinrichtung (5) eingesetzten Grills (15) mit einer horizontalen Strebe (3) des Rahmens (2) verbunden ist, insbesondere durch eine Schraubverbindung (9).

4. Regalsystem (1) nach einem der vorhergehenden Ansprüche, **dadurch gekennzeichnet, dass** der Haltestift (7, 8) eine längliche Zylinderform hat und/oder an einem freien Ende (11) des Haltestiftes (7, 8) zum Stützen eines Grills (15) eine Rundung (12) aufweist, derart, dass eine in die Grillaufnahmeeinrichtung (5) eingesetzter Grill (15) auf der Rundung (12) des freien Endes (11) des Haltestiftes (7, 8) aufsetzen kann.

5. Regalsystem (1) nach einem der vorhergehenden Ansprüche, **dadurch gekennzeichnet, dass** mindestens zwei sich gegenüberliegende, horizontale Streben (3) des Rahmens (2), die sich in Längsrichtung (17) des Rahmens (2) erstrecken, die Behälteraufnahmeeinrichtung (6) bilden, so dass ein in die Behälteraufnahmeeinrichtung (6) eingesetzter Behälter (16) auf den mindestens zwei horizontalen Streben (3) aufliegt.

6. Regalsystem (1) nach dem vorhergehenden Anspruch, **dadurch gekennzeichnet, dass** die Behälteraufnahmeeinrichtung (6) mindestens zwei Zusatzstreben (22) umfasst, die sich quer zur Längsrichtung (17) erstrecken.

7. Regalsystem (1) nach den zwei vorhergehenden Ansprüchen, **dadurch gekennzeichnet, dass** sich die Zusatzstreben (22) zwischen den zwei sich gegenüberliegenden, horizontalen Streben (3) der Behälteraufnahmeeinrichtung (6) erstrecken.

8. Regalsystem (1) nach einem der zwei vorhergehenden Ansprüche, **dadurch gekennzeichnet, dass** die Zusatzstreben (22) mit einem vertikalen Versatz (23) mit zwei gegenüberliegenden, horizontalen Streben (3) verbunden sind, derart, dass die Zusatzstrebe (22) vertikal niedriger als die horizontalen Streben (3) angeordnet ist und/oder an beiden Enden jeweils eine Stufenform mit der verbundenen horizontalen Strebe (3) bildet.

9. Regalsystem (1) nach einem der drei vorhergehenden Ansprüche, **dadurch gekennzeichnet, dass** ein lichter Abstand zwischen den zwei Zusatzstreben (22) in Längsrichtung (17) des Rahmens (2) dem lichten Abstand zwischen zwei sich gegenüberliegenden, horizontalen Streben (3) quer zur Längsrichtung (17) entspricht.

10. Regalsystem (1) nach einem der vorhergehenden Ansprüche, **dadurch gekennzeichnet, dass** das Regalsystem (1) den mindestens einen Behälter (16) für die Speise oder Speisenbestandteile und/oder mindestens ein Brett (24) zum Bearbeiten einer Speise oder von Speisebestandteilen darauf umfasst.

11. Regalsystem (1) nach den zwei vorhergehenden Ansprüchen, **dadurch gekennzeichnet, dass** an einer Unterseite des Brettes (24) und/oder des Behälters (16) ein mittiger, sich vertikal nach unten erstreckender Vorsprung (25) vorhanden ist, der eine horizontale Ausdehnung aufweist, die relativ zum Abstand zwischen den zwei sich gegenüberliegenden, horizontalen Streben (3) eine Spielpassung hat.

12. Regalsystem (1) nach einem der vorhergehenden Ansprüche, **dadurch gekennzeichnet, dass** das Regalsystem (1) im Bodenbereich (28) des Rahmens (2) an einem Ende in Längsrichtung (17) ein Rad (29) zum Bewegen des Rahmens (2) und/oder an dem gegenüberliegenden Ende in Längsrichtung (17) einen nicht beweglichen Fuß (30) zum Abstützen des Rahmens (2) auf einem Untergrund (31) umfasst.

13. Regalsystem (1) nach einem der vorhergehenden Ansprüche, **dadurch gekennzeichnet, dass** das Regalsystem (1) einen kugelartigen oder halbkugelförmigen Grill (15) zum Einsetzen von oben in die Grillaufnahmeeinrichtung (5) zum Aufnehmen des Grills (15) umfasst.

14. Regalsystem (1) nach dem vorhergehenden Anspruch, **dadurch gekennzeichnet, dass** die Grillaufnahmeeinrichtung (5) so eingerichtet ist, dass der Grill (15) nach dem Einsetzen von oben in die Grillaufnahmeeinrichtung (5) an genau drei Stellen (14) Berührkontakt mit der Grillaufnahmeeinrichtung (5) zum Stützen des Grills (15) hat.

15. Regalsystem (1) nach dem vorhergehenden Anspruch, **dadurch gekennzeichnet, dass** die Grillaufnahmeeinrichtung so eingerichtet ist, dass sich eine erste Stelle (14) mit Berührkontakt quer zur Längsrichtung (17) betrachtet mittig relativ zum Rahmen (2) befindet und zwei weitere Stellen (14) von insgesamt drei Stellen (14) mit Berührkontakt so angeordnet sind, dass sich die zweite Stelle (14) und dritte Stelle (14) quer zur Längsrichtung (17) gegenüber liegen und in Längsrichtung (17) betrachtet eine geringe Distanz zu einer quer zur Längsrichtung (17) verlaufenden Mittelachse (18) des Grills (15) aufweisen als die erste Stelle (14).
